# EUROPÄISCHE PATENTSCHRIFT

(11) **EP 3 750 622 B1**
(45) Veröffentlichungstag und Bekanntmachung des Hinweises auf die Patenterteilung: **12.01.2022**
(21) Anmeldenummer: 19179543.4
(22) Anmeldetag: 11.06.2019
(51) Int. Cl.: B01F 7/04, B01F 11/00, B29B 7/42, B29C 48/25, B29C 48/395, B29C 48/685, B29B 7/84

(54) **MISCH- UND KNETMASCHINENGEHÄUSE FÜR SYMMETRISCHE 2-, 3- UND 4-FLÜGELSCHNECKENELEMENTE**
MIXING AND KNEADING MACHINE HOUSING FOR SYMMETRIC 2-, 3- AND 4-LEAF SCREW ELEMENTS
BOITIER DE MACHINE DE MÉLANGE ET DE PÉTRISSAGE POUR ÉLÉMENTS SYMÉTRIQUES DE VIS SANS FIN À 2, 3 ET 4 AILETTES

(43) Veröffentlichungstag der Anmeldung: 16.12.2020
(73) Patentinhaber: Buss AG, 4133 Pratteln (CH)
(72) Erfinder: Max, GUNTERN, 4600 Olten (CH)
(74) Vertreter: Henkel & Partner mbB

(56) Entgegenhaltungen:
- EP-A1- 0 082 494
- EP-A1- 3 473 404
- WO-A1-2019/076632

## Beschreibung

Die vorliegende Erfindung betrifft eine Gehäuseschale und ein Gehäuse für eine Misch- und Knetmaschine mit symmetrischen 2-, 3- und/oder 4-Flügelschneckenelementen für kontinuierliche Aufbereitungsprozesse sowie eine ein solches Gehäuse bzw. eine solche Gehäuseschale umfassende Misch- und Knetmaschine.

Derartige Misch- und Knetmaschinen werden insbesondere zum Aufbereiten von plastischen und/oder pastösen Massen eingesetzt. Beispielsweise dienen sie dem Verarbeiten von zähplastischen Massen, dem Homogenisieren und Plastifizieren von Kunststoffen, dem Einarbeiten von Füll- und Verstärkungsstoffen sowie dem Herstellen von Ausgangsmaterialien für die Lebensmittelindustrie.

Üblicherweise ist in den Gehäusen derartiger Misch- und Knetmaschinen ein von der Innenumfangsfläche des Gehäuses begrenzter hohler Innenraum ausgebildet, in dem sich eine zumindest abschnittsweise in axialer Richtung durch den Innenraum erstreckende Schneckenwelle angeordnet ist, welche bei dem Betrieb in dem Innenraum rotiert und sich gleichzeitig in der axialen Richtung translatorisch hin- und her bewegt. Auf der Schneckenwelle sind Flügelelemente angeordnet, durch welche das in dem Innenraum befindliche, zu knetende und/oder zu mischende Gemisch homogen vermischt bzw. geknetet wird. Bei diesen Misch- und Knetmaschinen führt die Schneckenwelle nicht nur eine rotative Bewegung aus, sondern bewegt sich gleichzeitig auch in der axialen Richtung, d.h. in der Richtung der Schneckenwelle, translatorisch vor und zurück, so dass die Schneckenwelle in der axialen Richtung gesehen eine der Rotation überlagerte oszillatorische Bewegung, also eine der Rotation überlagerte Sinusbewegung ausführt. Dieser Bewegungsablauf ermöglicht das gehäuseseitige Einbringen von Einbauten, nämlich von Knetelementen, wie von Knetbolzen oder von Knetzähnen. Zum Fixieren der Knetelemente an der Innenumfangsfläche des Gehäuses weist die Innenumfangsfläche des Gehäuses entsprechende Aufnahmen auf, in welchen die Knetelemente fixiert werden. Wegen des Vorhandenseins der Knetelemente verläuft die auf der Hauptwelle, dem sogenannten Wellenstab, angeordnete Schnecke nicht - in Querschnittsrichtung des Wellenstabs gesehen - durchgehend, sondern ist in eine Mehrzahl von einzelnen Flügelelementen unterteilt. Die Rotation und die translatorische Bewegung der Schneckenwelle in axialer Richtung werden so gesteuert, dass die einzelnen Flügelelemente in die Nähe der entsprechenden Knetelemente gelangen, um das zu mischende und knetende Material zu verdichten und eine Scherwirkung auf dieses auszuüben, um so den Mischungs- und/oder Knetvorgang zu befördern, ohne dass die Knetelemente mit den Flügelelementen kollidieren.

Solche gattungsgemäßen Misch- und Knetmaschinen sind beispielsweise aus der CH 278 575 A sowie aus der CH 464 656 bekannt.

Typischerweise umfasst das Knetergehäuse drei oder vier sich in axialer Richtung der Misch- und Knetmaschine erstreckende Reihen von Knetelementen, wobei die einzelnen Reihen von Knetelementen gleichmäßig über den Querschnittsumfang der Innenumfangsfläche des Knetergehäuse verteilt sind. Mit anderen Worten sind die Reihen von Knetelementen über den Querschnittsumfang der üblicherweise zylindrischen Innenumfangsfläche des Knetergehäuse so verteilt, dass die Winkelabstände zwischen den Knetelementen der verschiedenen, sich in axialer Richtung erstreckenden Reihen auf dem kreisrunden Querschnittsumfang der zylindrischen Innenumfangsfläche des Knetergehäuses jeweils gleich sind. Weist die Misch- und Knetmaschine beispielsweise 4 Knetelementreihen auf, betragen die Winkelabstände zwischen jeweils zwei benachbarten Knetelementen auf dem Querschnittsumfang der Innenumfangsfläche des Knetergehäuses jeweils 90°. Dabei sind die Knetelemente der einzelnen Reihen gegenüber denen benachbarter Reihen auf der Innenumfangsfläche des Gehäuses üblicherweise geringfügig, in der axialen Richtung des Knetergehäuses gesehen, versetzt angeordnet, damit die einzelnen Flügelelemente der Schneckenwelle nicht mit den Knetbolzen kollidieren, wenn die Schneckenwelle rotiert und sich gleichzeitig translatorisch vor- und zurückbewegt. Die Anzahl und die Geometrie der Flügelelemente ist naturgemäß an die Anzahl der Knetelementreihen angepasst. Sind auf der Innenumfangsfläche des Gehäuses beispielsweise vier Reihen mit Knetelementen angeordnet, weist die Schneckenwelle, in dem Querschnitt gesehen, auf deren Umfang vier Flügelelemente auf, zwischen denen jeweils ein genügend breiter Abstand vorsehen ist, damit sich die Knetelemente durch diese Abstände hindurchbewegen können.

Dabei erstrecken sich die einzelnen Knetelemente, welche in den Aufnahmen der Gehäuseinnenwand fixiert sind, von der Innenumfangsfläche des Gehäuses radial in den von der Gehäuseinnenumfangsfläche begrenzten zylindrischen Innenraum hinein. Häufig ist das Gehäuse mehrteilig ausgestaltet. Dabei umfasst das Gehäuse wenigstens zwei miteinander verbundene Gehäuseteile, von denen jedes aus einem Außengehäuse und einer an dessen Innenumfangsfläche angeordneter austauschbarer Gehäuseschale bzw. Verschleißschale zusammengesetzt ist. In der vorliegenden Patentanmeldung wird/werden die Gehäuseschale(n) als Bestandteil des Gehäuses betrachtet. Daher wird in der vorliegenden Patentanmeldung als Gehäuseinnenumfangsfläche die Innenumfangsfläche der Gehäuseschale(n) angesehen, sofern das Gehäuse Gehäuseschale(n) aufweist. Um beispielsweise nach erfahrenem Verschleiß oder bei einer verfahrenstechnischen Anpassung ein leichtes Austauschen von Knetelementen zu gewährleisten, werden die einzelnen Knetelemente häufig durch eine als Aufnahme wirkende Bohrung in die Gehäuseschalen und das Außengehäuse gesteckt und von außen mittels einer an der Außenumfangsfläche des Außengehäuses angeordneten Gewindemutter gesichert. Dadurch ist ein Wechsel von Knetelementen einfach möglich. Da das Gehäuse dieser Misch- und Knetmaschinen durchgehend mit 3 oder 4 Knetelementreihen ausgerüstet ist, können nur Knetelemente gegen Blindbolzen getauscht werden; die Misch- und Knetmaschine bleibt grundsätzlich 3- bzw. 4-flüglig.

Andere Misch- und Knetmaschinen weisen Knetelemente auf, die mittels eines Presssitzes in den Aufnahmen der Innenumfangsfläche der Gehäuseschale bzw. des Gehäuses befestigt werden. Ein grundsätzlicher Nachteil dieser Art der Knetelementbefestigung besteht darin, dass zum Wechsel der Knetelemente aufgrund von Verschleiß oder für eine verfahrenstechnische Anpassung die Gehäuseschalen ausgebaut, die Knetelemente ausgepresst, neue Knetelemente eingepresst und die Gehäuseschalen wieder eingebaut werden müssen. Diese Arbeiten sind naturgemäß umständlich und zeitaufwändig.

Häufig sind die beschriebenen Misch- und Knetmaschinen in axialer Richtung in verschiedene Verfahrensabschnitte unterteilt, wobei jeder Verfahrensabschnitt gemäß seiner während des Betriebs zugeordneten Aufgabe mit entsprechender Anzahl bzw. Geometrie an Flügelelementen und Knetelementen besetzt ist. Beispielsweise ist es bekannt, die Schneckenwelle einer Misch- und Knetmaschine abschnittsweise dreiflüglig und abschnittsweise vierflüglig auszugestalten und entsprechend dazu korrespondierende Abschnitte der Gehäuseinnenwand der Misch- und Knetmaschine mit drei bzw. vier Reihen von Knetelementen auszustatten. Dies kann dadurch realisiert werden, dass das Gehäuse in mehrere Gehäuseschalen unterteilt ist, von denen einige drei Reihen von Aufnahmen für Knetelemente aufweisen und andere vier Reihen. Hingegen ist es nicht möglich, anstelle der Schale(n) mit drei Reihen von Aufnahmen für Knetelemente auch Schale(n) mit vier Reihen vorzusehen und nur drei davon mit Knetelementen zu bestücken, da die Teilung von 120°, wie sie drei Flügelelemente aufweisen, nicht zu der Teilung von 90°, wie sie vier Flügelelemente haben, passt. Wenn daher eine für ein spezielles zu mischendes Ausgangsmaterial hinsichtlich der Bestückung der einzelnen Verfahrensabschnitte mit Reihen von Knetelementen und Vorsehen von dazu korrespondierenden Flügelelementen auf dem Wellenstab der Schneckenwelle vorgesehene Einrichtung für eine andere Anwendung unter Einsatz eines anderen zu mischendes Ausgangsmaterial optimiert werden soll, müssen ein oder mehrere der Gehäuseschalen durch entsprechende ein oder mehrere andere Gehäuseschalen mit anderer Bestückung von Knetelementen ersetzt werden und in Anpassung daran der bzw. die dazu korrespondierende(n) Abschnitt(e) der Schneckenwelle mit entsprechenden anderen Flügelelementen ausgestattet werden. Dies führt zumindest in diesen Abschnitten wiederum zu den zuvor beschriebenen Nachteilen. Zudem muss bei dieser Ausgestaltung die Länge der einzelnen Gehäuseschalen klein gehalten werden, um einen möglichst hohen Freiheitsgrad zu erhalten, weil die Abschnitte entlang des Gehäuses durch die Länge der Schalen bestimmt wird. Bei jedem Umbau müssten dann nicht nur Knetelemente gewechselt werden, sondern zusätzlich auch die Gehäuseschalen, was zu sehr hohen Anschaffungskosten führt, da Gehäuseschalen teuer sind.

Aus der EP 3 473 404 A1 ist eine Misch- und Knetmaschine bekannt, welche ein Gehäuse mit einem im Querschnitt kreisförmigen Innenraum, eine im Betrieb in dem Innenraum des Gehäuses rotierende Schneckenwelle und eine Mehrzahl von von der Innenseite des Gehäuses nach innen ragenden Knetelementen, die in zumindest zwei Reihen angeordnet sind, wobei die Schneckenwelle Flügelelemente aufweist, die durch die Rotation und die translatorische Bewegung der Schneckenwelle ein zu mischendes und zu knetendes Material in einen Spalt zwischen dem jeweiligen Flügelelement und einem Knetelement hineinziehen, wobei durch eine hierbei entstehende Scherung eine Misch- und Knetwirkung erzielt wird, wobei in dem Gehäuse auch eine Mehrzahl von Aufnahmen für eine entsprechende Mehrzahl von Reihen von Knetelementen vorgesehen ist, wobei sich die Aufnahmen über den durch den kreisförmigen Innenraum definierten Kreisbogen hinweg ungleichmäßig verteilen.

Insgesamt ist es im Stand der Technik aufwendig, eine Misch- und Knetmaschine in Anpassung an ein anderes zu mischendes Ausgangsmaterial umzurüsten, insbesondere was die Anzahl der Reihen von Knetelementen und die entsprechende Flügelelementanzahl an der Schneckenwelle angeht.

Es ist daher die Aufgabe der vorliegenden Erfindung, ein Gehäuse für eine Mischund Knetmaschine bereitzustellen, welches im Hinblick auf die Anzahl und Anordnung der Knetelemente sowie die Anzahl der Flügelelemente an der Schneckenwelle leicht umrüstbar ist, und zwar unabhängig davon, wo und in welcher Länge 2-, 3-, bzw. 4-flüglige Abschnitte entlang des Gehäuses angeordnet werden sollen.

Erfindungsgemäß wird diese Aufgabe durch ein Gehäuse für eine Misch- und Knetmaschine für kontinuierliche Aufbereitungsprozesse gelöst, wobei in dem Gehäuse ein von der Innenumfangsfläche des Gehäuses begrenzter hohler Innenraum ausgebildet ist und in dem Gehäuse sich von der Innenumfangsfläche des Gehäuses in das Gehäuse zumindest abschnittsweise hinein erstreckende Aufnahmen für Knetelemente vorgesehen sind, wobei die Aufnahmen an der Innenumfangsfläche des Gehäuses in sechs sich in der axialen Richtung über zumindest einen Abschnitt der Innenumfangsfläche des Gehäuses erstreckenden Reihen angeordnet sind, wobei alle der sechs Reihen jeweils mindestens drei Aufnahmen für Knetelemente umfassen, wobei sich die Aufnahmen für Knetelemente der sechs Reihen, im Querschnitt des Gehäuses gesehen, über den durch die Innenumfangsfläche des Gehäuses definierten Umfang hinweg ungleichmäßig verteilen, wobei der Winkel zwischen einer Aufnahme einer ersten Reihe für Knetelemente und einer Aufnahme der, im Querschnitt des Gehäuses gesehen auf der Innenumfangsfläche des Gehäuses benachbarten zweiten Reihe 80 bis 100° beträgt, der Winkel zwischen der Aufnahme der zweiten Reihe und einer Aufnahme der, im Querschnitt des Gehäuses gesehen auf der Innenumfangsfläche des Gehäuses benachbarten dritten Reihe 80 bis 100° beträgt, der Winkel zwischen der Aufnahme der dritten Reihe und einer Aufnahme der, im Querschnitt des Gehäuses gesehen auf der Innenumfangsfläche des Gehäuses benachbarten vierten Reihe für Knetelemente 20 bis 40° beträgt, der Winkel zwischen der Aufnahme der vierten Reihe und einer Aufnahme der, im Querschnitt des Gehäuses gesehen auf der Innenumfangsfläche des Gehäuses benachbarten fünften Reihe 50 bis 70° beträgt, der Winkel zwischen der Aufnahme der fünften Reihe und einer Aufnahme der, im Querschnitt des Gehäuses gesehen auf der Innenumfangsfläche des Gehäuses benachbarten sechsten Reihe 50 bis 70° beträgt und der Winkel zwischen der Aufnahme der sechsten Reihe und der Aufnahme der, im Querschnitt des Gehäuses gesehen auf der Innenumfangsfläche des Gehäuses benachbarten ersten Reihe 20 bis 40° beträgt, wobei die Summe der Winkel zwischen allen benachbarten Aufnahmen 360° beträgt.

Das erfindungsgemäße Gehäuse für eine Misch- und Knetmaschine zeichnet sich dadurch aus, dass dieses an der Innenumfangsfläche sechs sich in axialer Richtung erstreckende Reihen von Aufnahmen für Knetelemente aufweist, wobei sich die Aufnahmen für Knetelemente der sechs Reihen, im Querschnitt des Gehäuses gesehen, über den durch die Innenumfangsfläche des Gehäuses definierten Umfang hinweg ungleichmäßig verteilen, und zwar speziell durch die vorstehend genannten Winkelabstände. Unter einer ungleichmäßigen Verteilung der Aufnahmen für Knetelemente über den durch die Innenumfangsfläche des Gehäuses definierten Umfang wird somit im Sinne der vorliegenden Erfindung verstanden, dass - im Querschnitt des Gehäuses betrachtet - von allen Abständen bzw. Winkelabständen zwischen jeweils zwei Aufnahmen für Knetelemente benachbarter Reihen auf der Innenumfangsfläche des Gehäuses mindestens zwei Abstände bzw. mindestens zwei Winkelabstände voneinander verschieden sind. Während nämlich der Winkelabstand zwischen einigen benachbarten Reihen von Aufnahmen 80 bis 100° beträgt, beträgt der zwischen anderen benachbarten Reihen 20 bis 40° und der zwischen wiederum anderen benachbarten Reihen 50 bis 70°. Wie vorstehend dargelegt, sind die Aufnahmen für Knetelemente jeder Reihe gegenüber denen benachbarter Reihen, in der axialen Richtung des Knetergehäuses gesehen, vorzugsweise geringfügig versetzt angeordnet, damit die einzelnen Flügelelemente der Schneckenwelle nicht mit den darin aufgenommenen Knetbolzen kollidieren, wenn die Schneckenwelle rotiert und sich gleichzeitig translatorisch vor- und zurückbewegt. Unter Winkelabstand von Aufnahmen zweier benachbarter Reihen auf der Innenumfangsfläche des Gehäuses wird der Winkelabstand zwischen der Aufnahme einer ersten Reihe und dem Punkt der durch die Mittelpunkte der Aufnahmen der benachbarten Reihe verlaufenden Gerade, der - bezogen auf die Längsrichtung des Gehäuses - senkrecht ober- bzw. unterhalb der Aufnahme der ersten Reihe liegt, auf der Innenumfangsfläche des Gehäuses verstanden. Durch die spezielle ungleichmäßige Verteilung der Aufnahmen für Knetelemente über den durch die Innenumfangsfläche des Gehäuses definierten Umfang wird es erreicht, dass auf diese einfache Art und Weise in allen Abschnitten des Gehäuses der Knetelemente die Anzahl der Flügelelemente und die Anzahl der Knetelemente beliebig an die verfahrenstechnische Aufgabenstellung angepasst werden kann. Insbesondere können beliebig viele und beliebig lange Abschnitte des Gehäuses 2-, 3- oder 4-flüglig ausgestaltet werden, ohne dass Gehäuseschalen gewechselt werden müssen, und ohne, dass Knetelemente bzw. Blindbolzen in einzelne Aufnahmen der Gehäuseschalen eingepresst werden müssen. Vielmehr erlaubt es die erfindungsgemäße Ausgestaltung der Anordnung der Aufnahmen für Knetelemente, dass die Aufnahmen in dem Außengehäuse in exakt denselben sechs Reihen angeordnet sind wie die Aufnahmen in den Gehäuseschalen, so dass die Knetelemente bzw. Blindbolzen in einzelne Aufnahmen lediglich in die Aufnahmen eingesteckt werden müssen und einfach durch ein Fixierelement an der Außenseite des Außengehäuses fixiert werden können. Ein 2-flügliger Abschnitt lässt sich einfach dadurch realisieren, dass die Knetelemente in zwei auf der Querschnittsfläche der Innenumfangsfläche des Gehäuses gegenüberliegende Reihen von Aufnahmen eingesteckt werden, wohingegen die anderen Reihen von Aufnahmen mit Blindbolzen bestückt werden. Ein 4-flügliger Abschnitt lässt sich einfach dadurch realisieren, dass die Knetelemente in dem Gehäuse in die gemäß vorstehender Nummerierung ersten, zweiten, dritten und fünften Reihen von Aufnahmen eingesteckt werden, wohingegen die anderen Reihen von Aufnahmen mit Blindbolzen bestückt werden. Schließlich lässt sich ein 3-flügliger Abschnitt einfach dadurch realisieren, dass die Knetelemente in dem Gehäuse in die gemäß vorstehender Nummerierung zweiten, vierten und sechsten Reihen von Aufnahmen eingesteckt werden, wohingegen die anderen Reihen von Aufnahmen mit Blindbolzen bestückt werden. Insgesamt stellt die vorliegende Erfindung mithin ein Gehäuse für eine Misch- und Knetmaschine bereit, welches im Hinblick auf die Anzahl und Anordnung der Knetelemente leicht umrüstbar ist, und zwar unabhängig davon, wo 2-, 3-, bzw. 4-flüglige Abschnitte entlang des Gehäuses angeordnet werden sollen.

Erfindungsgemäß sind die Aufnahmen für Knetelemente der sechs Reihen, im Querschnitt des Gehäuses gesehen, derart über den durch die Innenumfangsfläche des Gehäuses definierten Umfang hinweg ungleichmäßig verteilt, dass der Winkel zwischen den Aufnahmen der ersten und benachbarten zweiten Reihe 80 bis 100° beträgt, der Winkel zwischen den Aufnahmen der zweiten und der dritten Reihe 80 bis 100° beträgt, der Winkel zwischen den Aufnahmen der dritten und der vierten Reihe 20 bis 40° beträgt, der Winkel zwischen den Aufnahmen der vierten und der fünften Reihe 50 bis 70° beträgt, der Winkel zwischen den Aufnahmen der fünften und der sechsten Reihe 50 bis 70° beträgt und der Winkel zwischen den Aufnahmen der sechsten und der ersten Reihe 20 bis 40° beträgt. Dadurch wird gewährleistet, dass sich zumindest zwei Reihen von Aufnahmen zumindest im Wesentlichen auf der Innenumfangsfläche des Gehäuses gegenüberliegen, so dass bei Bestückung dieser beiden Reihen ein Abschnitt für symmetrische 2-Flügelelmente ausgestaltet wird. Zudem wird dadurch gewährleistet, dass die Winkelabstände zwischen den - gemäß vorstehender Nummerierung - zweiten, vierten und sechsten Reihen von Aufnahmen jeweils zumindest im Wesentlichen 120° betragen, so dass bei Bestückung dieser drei Reihen ein Abschnitt für symmetrische 3-Flügelelmente ausgestaltet wird, und, dass die Winkelabstände zwischen den - gemäß vorstehender Nummerierung - ersten, zweiten, dritten und fünften Reihen von Aufnahmen jeweils zumindest im Wesentlichen 90° betragen, so dass bei Bestückung dieser vier Reihen ein Abschnitt für symmetrische 4-Flügelelmente ausgestaltet wird. Unter erster Reihe, benachbarter zweiter Reihe, benachbarter dritter Reihe, benachbarter vierter Reihe, benachbarter fünfter Reihe und benachbarter sechster Reihe werden dabei die Reihen verstanden, die im Uhrzeigersinn oder entgegen dem Uhrzeigersinn - im Querschnitt gesehen - auf der Innenumfangsfläche des Gehäuses direkt benachbart zueinander sind, also zwischen denen keine anderen Aufnahmen für Knetelemente angeordnet sind.

Gemäß einer besonders bevorzugten Ausführungsform der vorliegenden Erfindung sind die Aufnahmen für Knetelemente der sechs Reihen, im Querschnitt des Gehäuses gesehen, über den durch die Innenumfangsfläche des Gehäuses definierten Umfang hinweg derart ungleichmäßig verteilt, dass der Winkel zwischen den Aufnahmen der ersten und benachbarten zweiten Reihe 85 bis 95° beträgt, der Winkel zwischen den Aufnahmen der zweiten und der dritten Reihe 85 bis 95° beträgt, der Winkel zwischen den Aufnahmen der dritten und der vierten Reihe 25 bis 35° beträgt, der Winkel zwischen den Aufnahmen der vierten und der fünften Reihe 55 bis 65° beträgt, der Winkel zwischen den Aufnahmen der fünften und der sechsten Reihe 55 bis 65° beträgt und der Winkel zwischen den Aufnahmen der sechsten und der ersten Reihe 25 bis 35° beträgt. Dadurch wird noch besser gewährleistet, dass sich zumindest zwei Reihen von Aufnahmen zumindest im Wesentlichen auf der Innenumfangsfläche des Gehäuses gegenüberliegen, die Winkelabstände zwischen den zweiten, vierten und sechsten Reihen von Aufnahmen jeweils zumindest im Wesentlichen 120° betragen und die Winkelabstände zwischen den ersten, zweiten, dritten und fünften Reihen von Aufnahmen jeweils zumindest im Wesentlichen 90° betragen.

In Weiterbildung des Erfindungsgedankens wird es vorgeschlagen, dass der Winkel zwischen den Aufnahmen der ersten und benachbarten zweiten Reihe etwa 90° beträgt, der Winkel zwischen den Aufnahmen der zweiten und der dritten Reihe etwa 90° beträgt, der Winkel zwischen den Aufnahmen der dritten und der vierten Reihe etwa 30° beträgt, der Winkel zwischen den Aufnahmen der vierten und der fünften Reihe etwa 60° beträgt, der Winkel zwischen den Aufnahmen der fünften und der sechsten Reihe etwa 60° beträgt und der Winkel zwischen den Aufnahmen der sechsten und der ersten Reihe etwa 30° beträgt, wobei etwa bedeutet, dass der Winkel den entsprechenden Wert mit einer Toleranz von +/-2°, bevorzugt +/-1° und besonders bevorzugt +/-0,5° aufweist.

Höchst bevorzugt beträgt der Winkel zwischen den Aufnahmen der ersten und benachbarten zweiten Reihe 90°, beträgt der Winkel zwischen den Aufnahmen der zweiten und der dritten Reihe 90°, beträgt der Winkel zwischen den Aufnahmen der dritten und der vierten Reihe 30°, beträgt der Winkel zwischen den Aufnahmen der vierten und der fünften Reihe 60°, beträgt der Winkel zwischen den Aufnahmen der fünften und der sechsten Reihe 60° und beträgt der Winkel zwischen den Aufnahmen der sechsten und der ersten Reihe 30°.

Unter einer Aufnahme für Knetelemente wird im Sinne der vorliegenden Erfindung ein Hohlraum an der Innenumfangsfläche des Gehäuses angesehen, der so ausgestaltet ist, dass ein Knetelement, also ein Knetbolzen, ein Knetzahn oder dergleichen, in diesem angeordnet und durch diesen befestigt werden kann, so dass sich das Knetelement von der Innenumfangsfläche des Gehäuses radial nach innen in den hohlen Innenraum hinein erstreckt. Bei der Aufnahme kann es sich um eine Vertiefung, Aussparung, Bohrung oder dergleichen handeln, welche sich mehr oder weniger tief von der Innenumfangsfläche des Gehäuses in das Gehäuse hinein erstreckt. Vorzugsweise ist wenigstens eine der Aufnahmen eine Aussparung, Vertiefung oder Bohrung und sind bevorzugt jede der Aufnahmen eine Aussparung, Vertiefung oder Bohrung. Im Fall eines typischen zweikomponentigen Aufbaus des Gehäuses aus einem Außengehäuse und radial innen daran angeordneter Gehäuseschale erstreckt sich die Aufnahme von der Innenumfangsfläche der Gehäuseschale in diese und ggf. auch in das Außengehäuse hinein und ggf. durch das Außengehäuse hindurch. Im Fall eines einkomponentigen Aufbaus des Gehäuses erstreckt sich somit die Aufnahme von der Innenumfangsfläche des Gehäuses in dieses hinein und ggf. durch dieses hindurch.

Das erfindungsgemäße Gehäuse ist vorzugsweise aus mindestens zwei Gehäuseteilen zusammengesetzt, welche zum Öffnen des Gehäuses voneinander wegklappbar oder voneinander trennbar sind, wobei die Gehäuseteile im geschlossenen Zustand vorzugsweise einen im Querschnitt kreisförmigen (hohlen) Innenraum ausbilden.

Zudem ist es bevorzugt, dass das Gehäuse mehrteilig ausgestaltet ist. Dabei umfasst das Gehäuse wenigstens zwei miteinander verbundene Gehäuseteile, von denen jedes aus einem Außengehäuse und wenigstens einer an dessen Innenumfangsfläche angeordneter austauschbarer Gehäuseschale bzw. Verschleißschale zusammengesetzt ist. Wie dargelegt, wird/werden in der vorliegenden Patentanmeldung die Gehäuseschale(n) als Bestandteil des Gehäuses betrachtet. Daher wird in der vorliegenden Patentanmeldung als Gehäuseinnenumfangsfläche die Innenumfangsfläche der Gehäuseschale(n) angesehen, sofern das Gehäuse Gehäuseschale(n) aufweist. Dabei erstrecken sich die Aufnahmen für Knetelemente von der Innenumfangsfläche der wenigstens einen Gehäuseschale zumindest abschnittsweise in die Gehäuseschale hinein. Allerdings ist es bevorzugt, dass sich die Aufnahmen für Knetelemente von der Innenumfangsfläche der wenigstens einen Gehäuseschale durch die Gehäuseschale hindurch erstrecken und bevorzugt ebenfalls durch das angrenzende Außengehäuse hindurch erstrecken. Dadurch wird es möglich, ein in der Aufnahme angeordnetes Knetelement mit damit verbundenem Fixierelement an der Außenwand des Gehäuses durch eine Mutter zu fixieren.

Auch wenn das Gehäuse nur eine Gehäusewand umfasst, also keine Gehäuseschale(n), ist es bevorzugt, dass sich die Aufnahmen für Knetelemente von der Innenumfangsfläche des Gehäuses durch das Gehäuse hindurch erstrecken, um ein in der Aufnahme angeordnetes Knetelement mit damit verbundenem Fixierelement an der Außenwand des Gehäuses durch eine Mutter fixieren zu können.

In Weiterbildung des Erfindungsgedankens wird es vorgeschlagen, das Gehäuse und, wenn vorhanden, die wenigstens eine Gehäuseschale in zwei Hälften, also in zwei Gehäusehälften bzw. in zwei Gehäuseschalenhälften zu teilen. Dabei kann die Teilung entlang jeder beliebigen Längsebene des Gehäuses erfolgen, solange die Aufnahmen für Knetelemente unbeeinträchtigt bleiben, diese also durch die Teilung nicht tangiert werden.

Gemäß einer Ausführungsform der vorliegenden Erfindung sind das Gehäuse und, wenn vorhanden, die wenigstens eine Gehäuseschale vertikal geteilt.

Gemäß einer dazu alternativen Ausführungsform der vorliegenden Erfindung sind das Gehäuse und, wenn vorhanden, die wenigstens eine Gehäuseschale horizontal geteilt.

Erfindungsgemäß sind die Aufnahmen an der Innenumfangsfläche des Gehäuses in sechs sich in der axialen Richtung über zumindest einen Abschnitt der Innenumfangsfläche des Gehäuses erstreckenden Reihen angeordnet. Unter einer sich in der axialen Richtung der Misch- und Knetmaschine über zumindest einen Abschnitt der Innenumfangsfläche des Gehäuses erstreckenden Reihe von Aufnahmen für Knetelemente wird im Sinne der vorliegenden Erfindung verstanden, dass eine über die Mittelpunkte der voneinander in axialer Richtung beabstandeten Aufnahmen einer Reihe gelegte Verbindungslinie zumindest im Wesentlichen eine Gerade ist, wobei die maximale Abweichung der Verbindungslinie von einer Gerade weniger als 10°, bevorzugt weniger als 5° und weiter bevorzugt weniger als 2° bezogen auf den Querschnittsumfang der Innenumfangsfläche des Gehäuses beträgt. Dabei kann sich jede der Reihen von Aufnahmen über die gesamte axiale Länge der Gehäuseinnenumfangsfläche erstrecken oder über einen bestimmten Abschnitt der Länge der Gehäuseinnenumfangsfläche. Allerdings umfassen erfindungsgemäß die Reihen zumindest eines axialen Abschnitts des Gehäuses jeweils mindestens drei, bevorzugt mindestens fünf und ganz besonders bevorzugt mindestens acht Aufnahmen für Knetelemente. Vorzugsweise erstrecken sich alle Reihen jeweils über den gleichen Abschnitt der Gehäuseinnenumfangsfläche oder jeweils die gesamte axiale Länge der Gehäuseinnenumfangsfläche.

Unabhängig davon, ob sich jede Reihe von Aufnahmen jeweils über die gesamte Länge der Innenumfangsfläche des Gehäuses oder nur über einen Abschnitt davon erstreckt, ist es bevorzugt, dass jede Reihe 1 bis 5, bevorzugt 1 bis 4 und besonders bevorzugt 1 bis 3 Aufnahmen pro 1D umfasst, wobei 1D der Durchmesser des von der Innenumfangsfläche des Gehäuses begrenzten hohlen Innenraums ist. Dabei können alle Reihen dieselbe Anzahl von Aufnahmen oder eine andere Anzahl von Aufnahmen aufweisen. Allerdings ist es bevorzugt, dass alle Reihen dieselbe Anzahl von Aufnahmen aufweisen und die Aufnahmen aller Reihen untereinander jeweils gleich beabstandet sind, wobei jedoch - wie vorstehend dargelegt - die Aufnahmen jeder Reihe gegenüber denen der benachbarten Reihen, in der axialen Richtung des Knetergehäuses gesehen, geringfügig versetzt angeordnet sein können, damit die einzelnen Flügelelemente der Schneckenwelle nicht mit den darin aufgenommenen Knetbolzen kollidieren, wenn die Schneckenwelle rotiert und sich gleichzeitig translatorisch vor- und zurückbewegt.

Weitere Gegenstände der vorliegenden Erfindung sind eine Gehäuseschale oder wenigstens zwei Gehäuseschalenteile, welche sich zusammengesetzt zu einer Gehäuseschale ergänzen, wobei in der Gehäuseschale ein von der Innenumfangsfläche der Gehäuseschale begrenzter hohler Innenraum ausgebildet ist und sich in der Gehäuseschale von der Innenumfangsfläche der Gehäuseschale in die Gehäuseschale zumindest abschnittsweise hinein erstreckende Aufnahmen für Knetelemente vorgesehen sind, wobei die Aufnahmen an der Innenumfangsfläche der Gehäuseschale in sechs sich in der axialen Richtung über zumindest einen Abschnitt der Innenumfangsfläche der Gehäuseschale erstreckenden Reihen angeordnet sind, wobei alle der sechs Reihen jeweils mindestens drei Aufnahmen für Knetelemente umfassen, wobei sich die Aufnahmen für Knetelemente der sechs Reihen, im Querschnitt der Gehäuseschale gesehen, über den durch die Innenumfangsfläche der Gehäuseschale definierten Umfang hinweg ungleichmäßig verteilen, wobei der Winkel zwischen einer Aufnahme einer ersten Reihe für Knetelemente und einer Aufnahme der, im Querschnitt der Gehäuseschale gesehen auf der Innenumfangsfläche der Gehäuseschale benachbarten zweiten Reihe 80 bis 100° beträgt, der Winkel zwischen der Aufnahme der zweiten Reihe und einer Aufnahme der, im Querschnitt der Gehäuseschale gesehen auf der Innenumfangsfläche der Gehäuseschale benachbarten dritten Reihe 80 bis 100° beträgt, der Winkel zwischen der Aufnahme der dritten Reihe und einer Aufnahme der, im Querschnitt der Gehäuseschale gesehen auf der Innenumfangsfläche der Gehäuseschale benachbarten vierten Reihe für Knetelemente 20 bis 40° beträgt, der Winkel zwischen der Aufnahme der vierten Reihe und einer Aufnahme der, im Querschnitt der Gehäuseschale gesehen auf der Innenumfangsfläche der Gehäuseschale benachbarten fünften Reihe 50 bis 70° beträgt, der Winkel zwischen der Aufnahme der fünften Reihe und einer Aufnahme der, im Querschnitt der Gehäuseschale gesehen auf der Innenumfangsfläche der Gehäuseschale benachbarten sechsten Reihe 50 bis 70° beträgt und der Winkel zwischen der Aufnahme der sechsten Reihe und der Aufnahme der, im Querschnitt der Gehäuseschale gesehen auf der Innenumfangsfläche der Gehäuseschale benachbarten ersten Reihe 20 bis 40° beträgt, wobei die Summe der Winkel zwischen allen benachbarten Aufnahmen 360° beträgt.

Die vorstehend in Bezug auf das erfindungsgemäße Gehäuse als bevorzugt beschriebenen Ausführungsformen sind auch für die erfindungsgemäße Gehäuseschale und die wenigstens zwei Gehäuseschalenteile, welche sich zusammengesetzt zu einer Gehäuseschale ergänzen, bevorzugt.

Bei den wenigstens zwei Gehäuseschalenteilen handelt es sich bevorzugt um zwei Gehäuseschalenhälften, welche vorzugsweise einer horizontal oder vertikal geteilten Gehäuseschale entsprechen.

Ein weiterer Gegenstand der vorliegenden Erfindung ist eine Misch- und Knetmaschine für kontinuierliche Aufbereitungsprozesse, welche ein zuvor beschriebenes erfindungsgemäßes Gehäuse, eine zuvor beschriebene erfindungsgemäße Gehäuseschale oder wenigstens zwei zuvor beschriebene erfindungsgemäße Gehäuseschalenteile umfasst.

Gemäß einer bevorzugten Ausführungsform der vorliegenden Erfindung umfasst die Misch- und Knetmaschine ferner eine sich zumindest abschnittsweise in axialer Richtung durch den Innenraum des Gehäuses erstreckende Schneckenwelle, die bei dem Betrieb in dem Innenraum rotiert und sich gleichzeitig in der axialen Richtung translatorisch hin- und her bewegt. Dabei umfasst die Schneckenwelle vorzugsweise einen Wellenstab, auf dessen Umfangsfläche mindestens zwei sich von dem Wellenstab radial nach außen in Richtung der Innenumfangsfläche des Gehäuses erstreckende Flügelelemente angeordnet sind.

Vorzugsweise erstrecken sich die Flügelelemente auf dem Wellenstab in axialer Richtung gesehen in der Form von Reihen. Daher ist es bevorzugt, dass auf dem sich in der axialen Richtung des Gehäuses erstreckenden Abschnitt der Umfangsfläche des Wellenstabes der Schneckenwelle, der in dem Abschnitt der Innenumfangsfläche des Gehäuses liegt, über den sich die sechs Aufnahmen für Knetelemente umfassenden Reihen in der axialen Richtung des Gehäuses erstrecken, mindestens sechs sich von dem Wellenstab radial nach außen in Richtung der Innenumfangsfläche des Gehäuses erstreckende Flügelelemente angeordnet sind, wobei die Flügelelemente auf diesem Abschnitt des Wellenstabes in zumindest zwei sich in der axialen Richtung über diesen Abschnitt der Umfangsfläche des Wellenstabes erstreckenden Reihen angeordnet sind, wobei alle der zumindest zwei Reihen - in der axialen Richtung gesehen - jeweils mindestens zwei Flügelelemente umfassen.

In Weiterbildung des Erfindungsgedankens wird es vorgeschlagen, dass die Flügelelemente auf diesem Abschnitt des Wellenstabes in zwei, drei oder vier sich in der axialen Richtung über diesen Abschnitt der Umfangsfläche des Wellenstabes erstreckenden Reihen angeordnet sind, wobei alle der Reihen - in der axialen Richtung gesehen - jeweils mindestens zwei, bevorzugt mindestens drei, weiter bevorzugt mindestens fünf und besonders bevorzugt mindestens acht Flügelelemente umfassen. Mit anderen Worten ist zumindest dieser Abschnitt des Wellenstabes 2-flüglig, 3-flüglig oder 4-flüglig ausgestaltet.

Wie vorstehend dargelegt, eignet sich die vorliegende Erfindung insbesondere für symmetrische Flügelelemente. Daher ist es besonders bevorzugt, dass zumindest dieser Abschnitt des Wellenstabes zumindest im Wesentlichen symmetrisch 2-flüglig, zumindest im Wesentlichen symmetrisch 3-flüglig oder zumindest im Wesentlichen symmetrisch 4-flüglig ausgestaltet ist. Aus diesem Grund ist es bevorzugt, dass sich die Flügelelemente aller Reihen in dem Wert des Winkelabschnitts, über den sie sich über den Querschnittsumfang des Wellenstabes erstrecken, um nicht mehr als 10°, bevorzugt um nicht mehr als 5°, besonders bevorzugt um nicht mehr als 2° und ganz besonders bevorzugt gar nicht unterscheiden.

Wie ebenfalls vorstehend dargelegt, können die einzelnen Reihen von Aufnahmen für Knetelemente in axialer Richtung des Gehäuses der Misch- und Knetmaschine unterschiedlich mit Knetelementen und Blindbolzen bestückt sein.

Mithin kann von der Anzahl von Reihen von Aufnahmen für Knetelemente in einem ersten sich in axialer Richtung erstreckenden Abschnitt des Gehäuses der Mischund Knetmaschine eine erste Anzahl von Reihen mit Knetelementen besetzt sein und in einem zweiten sich in axialer Richtung erstreckenden Abschnitt des Gehäuses eine zweite Anzahl von Reihen mit Knetelementen besetzt sein, wobei die zweite Anzahl von der ersten Anzahl verschieden ist. Zudem kann dem ersten Abschnitt des Gehäuses ein entsprechender erster sich in axialer Richtung erstreckender Abschnitt der Schneckenwelle zugeordnet sein, wo die Anzahl der Flügelelemente eine dritte Anzahl ist, und der zweite Abschnitt des Gehäuses einem zweiten sich in axialer Richtung erstreckender Abschnitt der Schneckenwelle zugeordnet sein, wo die Anzahl der Flügelelemente eine vierte Anzahl ist, wobei die vierte Anzahl von der dritten Anzahl verschieden ist.

Beispielsweise können in einem ersten axialen Abschnitt des Gehäuses die Aufnahmen der erste und dritte Reihe mit Knetelementen bestückt sein und die anderen Aufnahmen mit Blindbolzen, um einen 2-flügligen Abschnitt auszubilden, wohingegen in einem zweitem axialen Abschnitt die Aufnahmen der zweiten, vierten und sechsten Reihe mit Knetelementen bestückt sind und die anderen Aufnahmen mit Blindbolzen, um einen 3-flügligen Abschnitt auszubilden, und in einem dritten axialen Abschnitt die Aufnahmen der ersten, zweiten, dritten und fünften Reihe mit Knetelementen bestückt sind und die anderen Aufnahmen mit Blindbolzen, um einen 4-flügligen Abschnitt auszubilden.

Nachfolgend wird die vorliegende Erfindung unter Bezug auf die Zeichnung näher beschrieben, in der:
- Fig. 1a: eine perspektivische Ansicht einer erfindungsgemäßen Misch- und Knetmaschine zeigt;
- Fig. 1b: einen schematischen Längsschnitt durch die in der Fig. 1a gezeigte erfindungsgemäße Misch- und Knetmaschine zeigt;
- Fig. 1c: einen Querschnitt des linken Abschnitts des Gehäuses der in der Fig. 1a gezeigten Misch- und Knetmaschine zeigt;
- Fig. 2: einen Querschnitt des Gehäuses einer Misch- und Knetmaschine gemäß eines anderen Ausführungsbeispiels der vorliegenden Erfindung zeigt;
- Fig. 3: einen Querschnitt des Gehäuses einer Misch- und Knetmaschine gemäß eines anderen Ausführungsbeispiels der vorliegenden Erfindung zeigt.

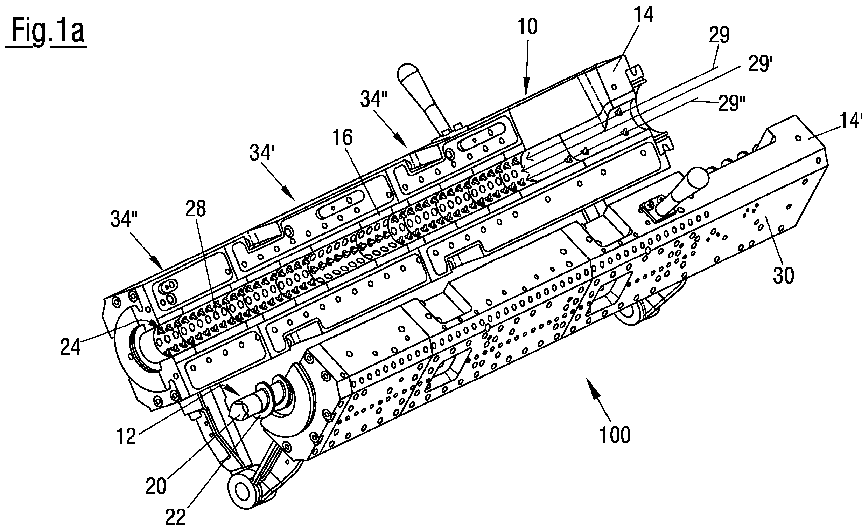

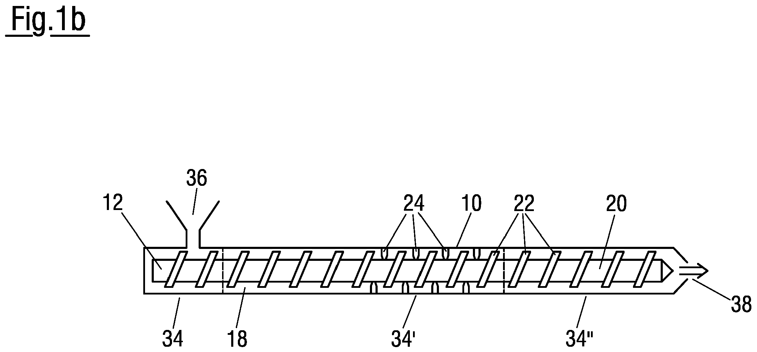

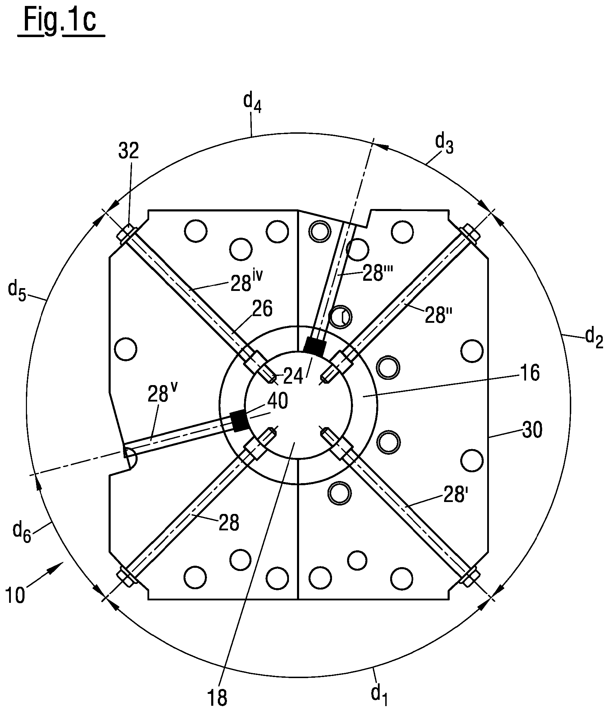

Die in den Fig. 1a, 1b und 1c in verschiedenen Ansichten schematisch gezeigte und im Ganzen mit 100 bezeichnete Misch- und Knetmaschine umfasst ein Gehäuse 10 und eine in dem Gehäuse 10 angeordnete Schneckenwelle 12. Das Gehäuse 10 umfasst zwei Gehäusehälften 14, 14', die innen mit einer sogenannten Gehäuseschale 16 ausgekleidet sind. Dabei wird die Gehäuseschale 16 in der vorliegenden Patentanmeldung als Bestandteil des Gehäuses 10 betrachtet. Die Innenumfangsfläche des Gehäuses 10 begrenzt, wenn die beiden Gehäusehälften 14, 14' geschlossen sind, einen zylindrischen hohlen Innenraum 18, also einen Innenraum 18 mit kreisförmigem Querschnitt.

Die Werkstoffe der Gehäuseschale 16 werden entsprechend den Extrudateigenschaften, wie z. B. Korrosion, Abrasion, Kombination aus beidem, tribologische Eigenschaften usw., gewählt. Üblich sind Gehäuseschalen 16 mit Spalt, der fertigungsbedingt durch die Teilung eines vorgefertigten Hohlzylinders, z. B. durch Drahterodieren, entsteht. Bekannt sind auch Halbschalen ohne Spalt für Extrudate, die auf Grund der Anforderungen an das Extrudat oder Extrudateigenschaften einen Spalt, wie z. B. Lebensmittel, thermische Sensitivität oder dergleichen, nicht zulassen.

Die Schneckenwelle 12 umfasst einen Wellenstab 20, auf dessen Umfangsfläche Flügelelemente 22 angeordnet sind. In den beiden Gehäusehälften 14, 14' sind Aufnahmen 28 bis 28^{V} für Knetelemente 24, also für Knetbolzen, Knetzähne und dergleichen, vorgesehen. Dabei ist jede der Aufnahmen 28 bis 28^{V}, wie in der Fig. 1c gezeigt, eine Bohrung 28 bis 28^{V}, welche sich von der Innenumfangsfläche der Gehäuseschale 16 durch die Gehäusewand hindurch erstreckt. Das untere, radial innen liegende Ende jeder Aufnahme 28 bis 28^{V} ist im Querschnitt vierkantig ausgestaltet. Jeder Knetbolzen 24 weist an seinem unteren Ende ein passgenau in das vierkantig ausgestaltete radial innere Ende der Aufnahmen 28 bis 28^{V} passendes Ende auf und ist dadurch im eingesetzten Zustand verdrehsicher in der Aufnahme 28 bis 28^{V} fixiert. In Abweichung von der konkret in der Fig. 1c dargestellten Ausführungsform kann das untere, radial innen liegende Ende jeder Aufnahme 28 bis 28^{V} im Querschnitt auch drei- oder sechskantig ausgestaltet sein.

Der Knetbolzen 24 ist an seinem in der Aufnahme 28 bis 28^{V} liegenden Ende mit einem in dem darüberliegenden Ende der Aufnahme 28 bis 28^{V} eingesetzten Fixierelement 26 durch Verschrauben verbunden. Dadurch werden die einzelnen Knetbolzen 24 von jeweils einem Fixierelement 26 gehalten, das an seinem dem Knetbolzen gegenüberliegenden Ende einen Außengewindeabschnitt aufweist, welcher über die Außenwand 30 des Gehäuses 10 hinaussteht, wo eine Mutter 32 aufschraubbar ist, um das Fixierelement 26 in dem Gehäuse 10 und damit auch den Knetbolzen 24 zu fixieren. Alternativ kann der Knetbolzen 24 auch ein Innengewinde für eine Schraube aufweisen und anstelle über das Fixierelement 26 und der Mutter 32 mit einer Schraube fixiert sein.

Wie insbesondere aus der Fig. 1a hervorgeht, erstrecken sich die voneinander jeweils gleich beabstandeten Aufnahmen 28 bis 28^{V} für die Knetbolzen 24 in jeder der beiden Gehäusehälften 14, 14', in der axialen Richtung gesehen, in Form von drei Reihen 29, 29', 29". Somit beträgt die Gesamtzahl der Reihen von Aufnahmen 29, 29', 29" des Gehäuses sechs. Unter Reihe wird im Sinne der vorliegenden Erfindung verstanden, dass eine über die voneinander in axialer Richtung beabstandeten Aufnahmen 28 bis 28^{V} einer Reihe 29, 29', 29" gelegte Verbindungslinie eine Gerade ist. Dabei sind die Aufnahmen 28 bis 28^{V} jeder Reihe 29, 29', 29" gegenüber denen benachbarter Reihen 29, 29', 29", in der axialen Richtung des Gehäuses 10 gesehen, geringfügig versetzt angeordnet, damit die einzelnen Flügelelemente 22 der Schneckenwelle 12 nicht mit den darin aufgenommenen Knetbolzen 24 kollidieren, wenn die Schneckenwelle 12 rotiert und sich gleichzeitig translatorisch vor- und zurückbewegt.

Wie in der Fig. 1b gezeigt, ist die Misch- und Knetmaschine in axialer Richtung in mehrere Verfahrensabschnitte 34, 34', 34" unterteilt, wobei jeder Verfahrensabschnitt 34, 34', 34" hinsichtlich der Anzahl an Knetbolzen 24 sowie der Anzahl und der Ausdehnung der Flügelelemente 24 auf dem Wellenstab 20 an die Funktion der einzelnen Verfahrensabschnitte 34, 34', 34" angepasst ist. Wie in der Fig. 1a dargestellt, sind in dem linken Abschnitt 34 und in dem rechten Abschnitt 34" der oberen Gehäusehälfte 14 von den drei Reihen 29, 29', 29" von Aufnahmen 28 bis 28^{V} für Knetbolzen 24 zwei Reihen, nämlich die obere Reihe 29 und die untere Reihe 29", mit Knetbolzen 24 bestückt, wohingegen die mittlere Reihe 29' nicht mit Knetbolzen 24 bestückt ist. Im Unterschied dazu ist in dem mittleren Abschnitt 34' der oberen Gehäusehälfte 14 von den drei Reihen 29, 29', 29" von Aufnahmen 28 bis 28^{V} für Knetbolzen 24 eine Reihe, nämlich die mittlere Reihe 29', mit Knetbolzen 24 bestückt, wohingegen die obere Reihe 29 und die untere Reihe 29" nicht mit Knetbolzen 24 bestückt ist.

Bei dem Verfahrensabschnitt 34 kann es sich beispielsweise um einen Einzugsabschnitt handeln, bei dem bei dem Verfahrensabschnitt 34' um einen Misch- und Homogenisierabschnitt und bei dem Verfahrensabschnitt 34" um einen Entgasungsabschnitt. Das zu mischende Ausgangsmaterial wird der Misch- und Knetmaschine 10 über den Fülltrichter 36 zugeführt, dann durch die Verfahrensabschnitte 34, 34', 34" geführt und schließlich über die Austrittsöffnung 38 abgeführt.

Das erfindungsgemäße Gehäuse 10 der Misch- und Knetmaschine 100 zeichnet sich, wie dies in der Fig. 1c deutlicher dargestellt ist, dadurch aus, dass sich, zumindest in dem in axialer Richtung des Gehäuses 10 links erstreckendem Abschnitt, die Aufnahmen 28 bis 28^{V} für Knetelemente 24, im Querschnitt des Gehäuses 10 gesehen, über den durch die Innenumfangsfläche des Gehäuses 10 definierten Umfang hinweg ungleichmäßig verteilen. Unter einer ungleichmäßigen Verteilung der Aufnahmen 28 bis 28^{V} für Knetelemente 24 über den durch die Innenumfangsfläche des Gehäuses 10 definierten Umfang wird dabei verstanden, dass - im Querschnitt des Gehäuses 10 betrachtet - von allen Winkelabständen d₁ bis d₆ zwischen jeweils zwei Aufnahmen 28 bis 28^{V} für Knetelemente 24 benachbarter Reihen auf der Innenumfangsfläche des Gehäuses 10 mindestens zwei der Winkelabstände d₁ bis d₆ voneinander verschieden sind. Dabei sind die Winkel d₁ bis d₆ derart ungleichmäßig verteilt, dass der Winkel d₁ zwischen der Aufnahme 28 der ersten Reihe für Knetelemente und der Aufnahme 28^{I} der, im Querschnitt des Gehäuses gesehen auf der Innenumfangsfläche des Gehäuses gegen den Uhrzeigersinn benachbarten zweiten Reihe 90° beträgt, der Winkel d₂ zwischen der Aufnahme 28^{I} der zweiten Reihe und der Aufnahme der, im Querschnitt des Gehäuses gesehen auf der Innenumfangsfläche des Gehäuses gegen den Uhrzeigersinn benachbarten Aufnahme 28^{II} der dritten Reihe 90° beträgt, der Winkel d₃ zwischen der Aufnahme 28" der dritten Reihe und der Aufnahme 28^{III} der, im Querschnitt des Gehäuses gesehen auf der Innenumfangsfläche des Gehäuses gegen den Uhrzeigersinn benachbarten vierten Reihe für Knetelemente 30° beträgt, der Winkel d₄ zwischen der Aufnahme 28^{III} der vierten Reihe und der Aufnahme 28^{IV} der, im Querschnitt des Gehäuses gesehen auf der Innenumfangsfläche des Gehäuses gegen den Uhrzeigersinn benachbarten fünften Reihe 60° beträgt, der Winkel d₅ zwischen der Aufnahme 28^{IV} der fünften Reihe und der Aufnahme 28^{V} der, im Querschnitt des Gehäuses gesehen auf der Innenumfangsfläche des Gehäuses gegen den Uhrzeigersinn benachbarten sechsten Reihe 60° beträgt und der Winkel d₆ zwischen der Aufnahme 28^{V} der sechsten Reihe und der Aufnahme 28 der, im Querschnitt des Gehäuses gesehen auf der Innenumfangsfläche des Gehäuses gegen den Uhrzeigersinn benachbarten ersten Reihe 30° beträgt, wobei die Summe der Winkel d₁ bis d₆ zwischen allen benachbarten Aufnahmen 360° beträgt. Von den Aufnahmen 28 bis 28^{V} der ersten bis sechsten Reihe sind die der ersten, zweiten, dritten und fünften Reihe jeweils mit einem Knetelement 24 mit daran befestigten Fixierelement 26 besetzt und an der Außenseite des Gehäuses 10 mit einer Mutter 32 befestigt, wohingegen die vierte und sechste Reihe mit Blindbolzen 40 bestückt sind. Die Winkel zwischen den jeweils mit einem Knetelement 24 bestückten Aufnahmen 28, 28^{I}, 28^{II} und 28^{IV} betragen jeweils 90°, so dass dieses Gehäuse mit einem symmetrischen 4-flügligen Schneckenwellenabschnitt betrieben werden kann.

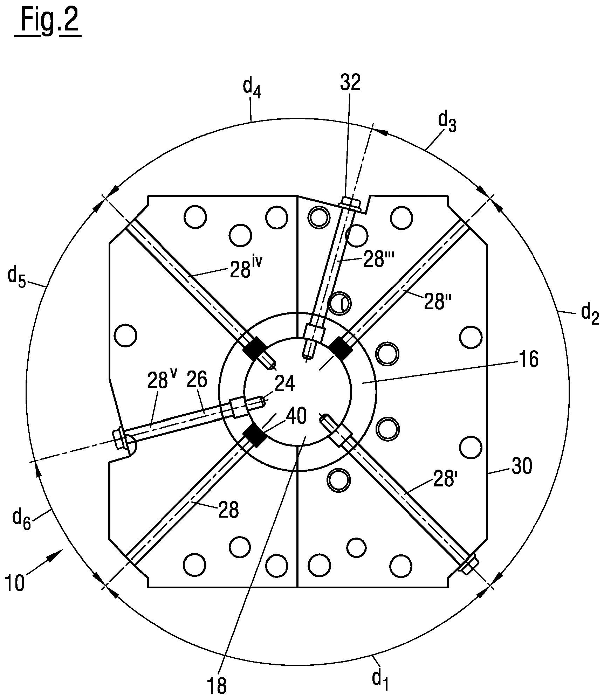

Im Unterschied zu der in der Fig. 1c gezeigten Ausführungsform, sind in dem in der Fig. 2 gezeigten Gehäuse von den Aufnahmen 28 bis 28^{V} der ersten bis sechsten Reihe die der zweiten, vierten und sechsten Reihe jeweils mit einem Knetelement 24 mit daran befestigten Fixierelement 26 besetzt und an der Außenseite des Gehäuses 10 mit einer Mutter 32 befestigt, wohingegen die erste, dritte und fünfte Reihe mit Blindbolzen 40 bestückt sind. Die Winkel zwischen den jeweils mit einem Knetelement 24 bestückten Aufnahmen 28^{I}, 28^{III} und 28^{V} betragen jeweils 120°, so dass dieses Gehäuse mit einem symmetrischen 3-flügligen Schneckenwellenabschnitt betrieben werden kann.

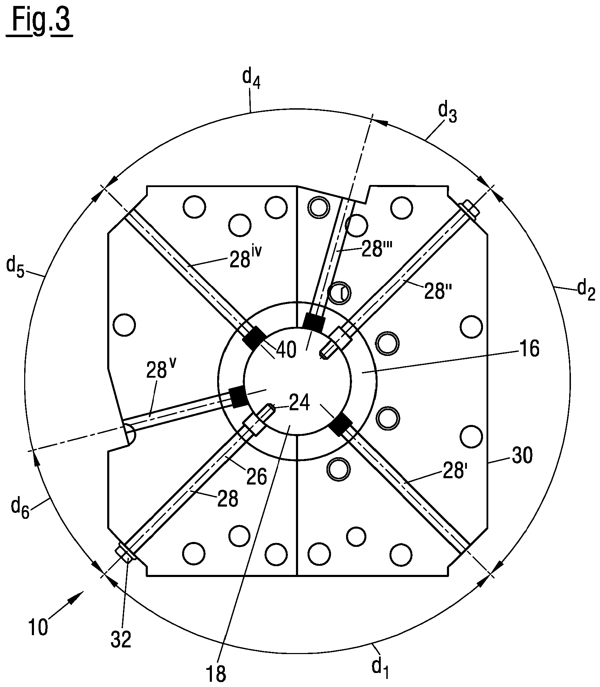

Im Unterschied zu den in den Fig. 1c und 2 gezeigten Ausführungsformen, sind in dem in der Fig. 3 gezeigten Gehäuse von den Aufnahmen 28 bis 28^{V} der ersten bis sechsten Reihe die der ersten und dritten Reihe jeweils mit einem Knetelement 24 mit daran befestigten Fixierelement 26 besetzt und an der Außenseite des Gehäuses 10 mit einer Mutter 32 befestigt, wohingegen die zweite, vierte, fünfte und sechste Reihe mit Blindbolzen 40 bestückt sind. Die Winkel zwischen den jeweils mit einem Knetelement 24 bestückten Aufnahmen 28 und 28" betragen jeweils 180°, so dass dieses Gehäuse mit einem symmetrischen 2-flügligen Schneckenwellenabschnitt betrieben werden kann.

In den Fig. 1c, 2 und 3 sind vertikal geteilte Gehäuse 10 und Gehäuseschalen 16 gezeigt. Die gleichen Ausführungsformen sind analog für horizontal geteilte Gehäuse 10 und Gehäuseschalen 16 oder entlang einer beliebigen Längsebene des Gehäuses geteilte Gehäuse 10 und Gehäuseschalen 16, solange die Aufnahmen für Knetelemente unbeeinträchtigt bleiben, möglich.

In den Fig. 1c, 2 und 3 sind die einzelnen Reihen so dargestellt, dass die erste bis sechste Reihe von unten links entgegen dem Uhrzeigersinn im Querschnitt der Innenumfangsfläche vertikal geteilte Gehäuse 10 und Gehäuseschalen 16 angeordnet sind. Die einzelnen Reihen können genauso gut im Uhrzeigersinn angeordnet sein und/oder die erste Reihe befindet sich nicht unten links im Gehäuse, sondern unten rechts oder oben links oder oben rechts oder an jeder anderen beliebigen Stelle des Gehäuses.

### Bezugszeichenliste

- 10: Gehäuse
- 12: Schneckenwelle
- 14, 14': Gehäusehälfte
- 16: Gehäuseschale
- 18: Innenraum
- 20: Wellenstab
- 22: Flügelelement
- 24: Knetelement/Knetbolzen
- 26: Fixierelement
- 28 bis 28^{V}: Aufnahme/Bohrung für Knetelement
- 29, 29', 29": (axial erstreckende) Reihe von Aufnahme für Knetelemente
- 30: Außenwand
- 32: Mutter
- 34, 34', 34": Verfahrensabschnitt
- 36: Fülltrichter
- 38: Austrittsöffnung
- 40: Blindbolzen
- 100: Misch- und Knetmaschine

- d₁ bis d₆: Winkelabstände zwischen zwei benachbarten Reihen von Aufnahmen für Knetelemente

## Patentansprüche

1. Gehäuse (10) für eine Misch- und Knetmaschine (100) für kontinuierliche Aufbereitungsprozesse, wobei in dem Gehäuse (10) ein von der Innenumfangsfläche des Gehäuses (10) begrenzter hohler Innenraum (18) ausgebildet ist, und in dem Gehäuse (10) sich von der Innenumfangsfläche des Gehäuses (10) in das Gehäuse (10) zumindest abschnittsweise hinein erstreckende Aufnahmen (28 bis 28^{V}) für Knetelemente (24) vorgesehen sind, wobei die Aufnahmen (28 bis 28^{V}) an der Innenumfangsfläche des Gehäuses (10) in sechs sich in der axialen Richtung über zumindest einen Abschnitt der Innenumfangsfläche des Gehäuses (10) erstreckenden Reihen (29, 29', 29") angeordnet sind, wobei alle der sechs Reihen (29, 29', 29") jeweils mindestens drei Aufnahmen (28 bis 28^{V}) für Knetelemente (24) umfassen, wobei sich die Aufnahmen (28 bis 28^{V}) für Knetelemente (24) der sechs Reihen (29, 29', 29"), im Querschnitt des Gehäuses (10) gesehen, über den durch die Innenumfangsfläche des Gehäuses (10) definierten Umfang hinweg ungleichmäßig verteilen, wobei der Winkel (d₁) zwischen einer Aufnahme (28) einer ersten Reihe für Knetelemente (24) und einer Aufnahme (28^{I}) der, im Querschnitt des Gehäuses (10) gesehen auf der Innenumfangsfläche des Gehäuses (10) benachbarten zweiten Reihe 80 bis 100° beträgt, der Winkel (d₂) zwischen der Aufnahme (28^{I}) der zweiten Reihe und einer Aufnahme (28") der, im Querschnitt des Gehäuses (10) gesehen auf der Innenumfangsfläche des Gehäuses (10) benachbarten dritten Reihe 80 bis 100° beträgt, der Winkel (d₃) zwischen der Aufnahme (28") der dritten Reihe und einer Aufnahme (28^{III}) der, im Querschnitt des Gehäuses (10) gesehen auf der Innenumfangsfläche des Gehäuses (10) benachbarten vierten Reihe für Knetelemente (24) 20 bis 40° beträgt, der Winkel (d₄) zwischen der Aufnahme (28^{III}) der vierten Reihe und einer Aufnahme (28^{IV}) der, im Querschnitt des Gehäuses (10) gesehen auf der Innenumfangsfläche des Gehäuses (10) benachbarten fünften Reihe 50 bis 70° beträgt, der Winkel (d₅) zwischen der Aufnahme (28^{IV}) der fünften Reihe und einer Aufnahme (28^{V}) der, im Querschnitt des Gehäuses (10) gesehen auf der Innenumfangsfläche des Gehäuses (10) benachbarten sechsten Reihe (28^{V}) 50 bis 70° beträgt und der Winkel (d₆) zwischen der Aufnahme (28^{V}) der sechsten Reihe und der Aufnahme (28) der, im Querschnitt des Gehäuses (10) gesehen auf der Innenumfangsfläche des Gehäuses (10) benachbarten ersten Reihe 20 bis 40° beträgt, wobei die Summe der Winkel (d₁ bis d₆) zwischen allen benachbarten Aufnahmen 360° beträgt.

2. Gehäuse (10) nach Anspruch 1, **dadurch gekennzeichnet, dass** der Winkel (d₁) zwischen den Aufnahmen (28, 28^{I}) der ersten und benachbarten zweiten Reihe 85 bis 95° beträgt, der Winkel (d₂) zwischen den Aufnahmen (28^{I}, 28^{II}) der zweiten und der dritten Reihe 85 bis 95° beträgt, der Winkel (d₃) zwischen den Aufnahmen (28^{II}, 28^{III}) der dritten und der vierten Reihe 25 bis 35° beträgt, der Winkel (d₄) zwischen den Aufnahmen (28^{III}, 28^{IV}) der vierten und der fünften Reihe 55 bis 65° beträgt, der Winkel (d₅) zwischen den Aufnahmen (28^{IV}, 28^{V}) der fünften und der sechsten Reihe 55 bis 65° beträgt und der Winkel (d₆) zwischen den Aufnahmen (28^{V}, 28) der sechsten und der ersten Reihe 25 bis 35° beträgt.

3. Gehäuse (10) nach Anspruch 1 oder 2, **dadurch gekennzeichnet, dass** der Winkel (d₁) zwischen den Aufnahmen (28, 28^{I}) der ersten und benachbarten zweiten Reihe 90° beträgt, der Winkel (d₂) zwischen den Aufnahmen (28^{I}, 28") der zweiten und der dritten Reihe 90° beträgt, der Winkel (d₃) zwischen den Aufnahmen (28^{II}, 28^{III}) der dritten und der vierten Reihe 30° beträgt, der Winkel (d₄) zwischen den Aufnahmen (28^{III} bis 28^{IV}) der vierten und der fünften Reihe 60° beträgt, der Winkel (d₅) zwischen den Aufnahmen (28^{IV}, 28^{V}) der fünften und der sechsten Reihe 60° beträgt und der Winkel (d₆) zwischen den Aufnahmen (28^{V}, 28) der sechsten und der ersten Reihe 30° beträgt.

4. Gehäuse (10) nach zumindest einem der vorhergehenden Ansprüche, **dadurch gekennzeichnet, dass** wenigstens eine der Aufnahmen (28 bis 28^{V}) und bevorzugt jede der Aufnahmen (28 bis 28^{V}) eine Aussparung, Vertiefung oder Bohrung ist.

5. Gehäuse (10) nach zumindest einem der vorhergehenden Ansprüche, **dadurch gekennzeichnet, dass** das Gehäuse ein Außengehäuse und wenigstens eine an dessen Innenumfangsfläche angeordnete austauschbare Gehäuseschale (16) umfasst, wobei sich die Aufnahmen (28 bis 28^{V}) für Knetelemente (24) von der Innenumfangsfläche der wenigstens einen Gehäuseschale (16) zumindest abschnittsweise in die Gehäuseschale (16) hinein erstrecken.

6. Gehäuse (10) nach zumindest einem der vorhergehenden Ansprüche, **dadurch gekennzeichnet, dass** sich wenigstens eine der Aufnahmen (28 bis 28^{V}) und bevorzugt jede der Aufnahmen (28 bis 28^{V}) durch die Gehäusewand hindurch erstreckt, so dass ein in der Aufnahme (28 bis 28^{V}) angeordnetes Knetelement (24) mit damit verbundenem Fixierelement (26) an der Außenwand (30) des Gehäuses (10) durch eine Mutter (32) fixiert werden kann.

7. Gehäuse (10) nach zumindest einem der vorhergehenden Ansprüche, **dadurch gekennzeichnet, dass** das Gehäuse (10) und, wenn vorhanden, die wenigstens eine Gehäuseschale (16) hälftig entlang einer Längsebene des Gehäuses (10), solange die Aufnahmen (28 bis 28^{V}) für Knetelemente (24) unbeeinträchtigt bleiben, und bevorzugt vertikal oder horizontal geteilt sind.

8. Gehäuse (10) nach zumindest einem der vorhergehenden Ansprüche, **dadurch gekennzeichnet, dass** jede der Reihen (29, 29', 29") jeweils mindestens fünf Aufnahmen (28 bis 28^{V}) und bevorzugt jeweils mindestens acht Aufnahmen für Knetelemente (24) umfasst.

9. Misch- und Knetmaschine (100) für kontinuierliche Aufbereitungsprozesse umfassend ein Gehäuse (10) nach zumindest einem der vorhergehenden Ansprüche.

10. Misch- und Knetmaschine (100) nach Anspruch 9, **dadurch gekennzeichnet, dass** diese ferner eine sich zumindest abschnittsweise in axialer Richtung durch den Innenraum (18) des Gehäuses (10) erstreckende Schneckenwelle (12) umfasst, die im Betrieb in dem Innenraum (18) rotiert und sich gleichzeitig in der axialen Richtung translatorisch hin- und her bewegt, wobei die Schneckenwelle (12) einen Wellenstab (20) umfasst, auf dessen Umfangsfläche mindestens zwei sich von dem Wellenstab (20) radial nach außen in Richtung der Innenumfangsfläche des Gehäuses (10) erstreckende Flügelelemente (22) angeordnet sind.

11. Misch- und Knetmaschine (100) nach Anspruch 10, **dadurch gekennzeichnet, dass** auf dem sich in der axialen Richtung des Gehäuses (10) erstreckenden Abschnitt der Umfangsfläche des Wellenstabes (20) der Schneckenwelle (12), der in dem Abschnitt der Innenumfangsfläche des Gehäuses (10) liegt, über den sich die sechs Aufnahmen (28 bis 28^{V}) für Knetelemente (24) umfassenden Reihen (29, 29', 29") in der axialen Richtung des Gehäuses (10) erstrecken, mindestens sechs sich von dem Wellenstab (20) radial nach außen in Richtung der Innenumfangsfläche des Gehäuses (10) erstreckende Flügelelemente (22) angeordnet sind, wobei die Flügelelemente (22) auf diesem Abschnitt des Wellenstabes (20) in zumindest zwei sich in der axialen Richtung über diesen Abschnitt der Umfangsfläche des Wellenstabes (20) erstreckenden Reihen angeordnet sind, wobei alle der zumindest zwei Reihen - in der axialen Richtung gesehen - jeweils mindestens drei Flügelelemente (22) umfassen.

12. Misch- und Knetmaschine (100) nach Anspruch 11, **dadurch gekennzeichnet, dass** die Flügelelemente (22) auf diesem Abschnitt des Wellenstabes (20) in zwei, drei oder vier sich in der axialen Richtung über diesen Abschnitt der Umfangsfläche des Wellenstabes (20) erstreckenden Reihen angeordnet sind, wobei alle der Reihen - in der axialen Richtung gesehen - jeweils mindestens drei, bevorzugt mindestens fünf und besonders bevorzugt mindestens acht Flügelelemente (22) umfassen.

13. Misch- und Knetmaschine (100) nach zumindest einem der Ansprüche 10 bis 12, **dadurch gekennzeichnet, dass** sich die Flügelelemente (22) aller Reihen in dem Wert des Winkelabschnitts, über den sie sich über den Querschnittsumfang des Wellenstabes (20) erstrecken, um nicht mehr als 10°, bevorzugt um nicht mehr als 5°, besonders bevorzugt um nicht mehr als und ganz besonders bevorzugt gar nicht unterscheiden.

14. Misch- und Knetmaschine (100) nach zumindest einem der Ansprüche 10 bis 13, **dadurch gekennzeichnet, dass** von der Anzahl von Reihen (29, 29', 29") von Aufnahmen (28 bis 28^{V}) für Knetelemente (24) in einem ersten sich in axialer Richtung erstreckenden Abschnitt des Gehäuses (10) eine erste Anzahl von Reihen (29, 29', 29") mit Knetelementen (24) besetzt ist und in einem zweiten sich in axialer Richtung erstreckenden Abschnitt des Gehäuses (10) eine zweite Anzahl von Reihen (29, 29', 29") mit Knetelementen (24) besetzt ist, wobei die zweite Anzahl von der ersten Anzahl verschieden ist, und dass dem ersten Abschnitt des Gehäuses (10) ein entsprechender erster sich in axialer Richtung erstreckender Abschnitt der Schneckenwelle (12) zugeordnet ist, wo die Anzahl der Flügelelemente (22) eine dritte Anzahl ist, und der zweite Abschnitt des Gehäuses (10) einem zweiten sich in axialer Richtung erstreckender Abschnitt der Schneckenwelle (12) zugeordnet ist, wo die Anzahl der Flügelelemente (22) eine vierte Anzahl ist, wobei die vierte Anzahl von der dritten Anzahl verschieden ist.

15. Gehäuseschale (16) oder wenigstens zwei Gehäuseschaleteile, welche sich zu einer Gehäuseschale (16) ergänzen, wobei in der Gehäuseschale (16) ein von der Innenumfangsfläche der Gehäuseschale (16) begrenzter hohler Innenraum (18) ausgebildet ist und sich in der Gehäuseschale (16) von der Innenumfangsfläche der Gehäuseschale (16) in die Gehäuseschale (16) zumindest abschnittsweise hinein erstreckende Aufnahmen (28 bis 28^{V}) für Knetelemente (24) vorgesehen sind, wobei die Aufnahmen (28 bis 28^{V}) an der Innenumfangsfläche der Gehäuseschale (16) in sechs sich in der axialen Richtung über zumindest einen Abschnitt der Innenumfangsfläche der Gehäuseschale (16) erstreckenden Reihen (29, 29', 29") angeordnet sind, wobei alle der sechs Reihen (29, 29', 29") jeweils mindestens drei Aufnahmen (28 bis 28^{V}) für Knetelemente (24) umfassen, wobei sich die Aufnahmen (28 bis 28^{V}) für Knetelemente (24) der sechs Reihen (29, 29', 29"), im Querschnitt der Gehäuseschale (16) gesehen, über den durch die Innenumfangsfläche der Gehäuseschale (16) definierten Umfang hinweg ungleichmäßig verteilen, wobei der Winkel (d₁) zwischen einer Aufnahme (28) einer ersten Reihe für Knetelemente (24) und einer Aufnahme (28^{I}) der, im Querschnitt der Gehäuseschale (16) gesehen auf der Innenumfangsfläche der Gehäuseschale (16) benachbarten zweiten Reihe 80 bis 100° beträgt, der Winkel (d₂) zwischen der Aufnahme (28^{I}) der zweiten Reihe und einer Aufnahme (28^{II}) der, im Querschnitt der Gehäuseschale (16) gesehen auf der Innenumfangsfläche der Gehäuseschale (16) benachbarten dritten Reihe 80 bis 100° beträgt, der Winkel (d₃) zwischen der Aufnahme (28") der dritten Reihe und einer Aufnahme (28^{III}) der, im Querschnitt der Gehäuseschale (16) gesehen auf der Innenumfangsfläche der Gehäuseschale (16) benachbarten vierten Reihe 20 bis 40° beträgt, der Winkel (d₄) zwischen der Aufnahme (28^{III}) der vierten Reihe und einer Aufnahme (28^{IV}) der, im Querschnitt der Gehäuseschale (16) gesehen auf der Innenumfangsfläche der Gehäuseschale (16) benachbarten fünften Reihe 50 bis 70° beträgt, der Winkel (d₅) zwischen der Aufnahme (28^{IV}) der fünften Reihe und der Aufnahme (28^{V}) der, im Querschnitt der Gehäuseschale (16) gesehen auf der Innenumfangsfläche der Gehäuseschale (16) benachbarten sechsten Reihe 50 bis 70° beträgt und der Winkel (d₆) zwischen der Aufnahme (28^{V}) der sechsten Reihe und der Aufnahme (28) der, im Querschnitt der Gehäuseschale (16) gesehen auf der Innenumfangsfläche der Gehäuseschale (16) benachbarten ersten Reihe 20 bis 40° beträgt, wobei die Summe der Winkel (d₁ bis d₆)zwischen allen benachbarten Aufnahmen 360° beträgt.

## Claims

1. A housing (10) for a mixing and kneading machine (100) for continuous preparation processes, wherein a hollow interior (18) delimited by the inner circumferential surface of the housing (10) is formed in the housing (10), and receptacles (28 to 28^{V}) for kneading elements (24) extending at least in portions from the inner circumferential surface of the housing (10) into the housing (10) are provided in the housing (10), wherein the receptacles (28 to 28^{V}) are arranged on the inner circumferential surface of the housing (10) in six rows (29, 29', 29") which extend in the axial direction over at least a portion of the inner circumferential surface of the housing (10), wherein all of the six rows (29, 29', 29") each comprise at least three receptacles (28 to 28^{V}) for kneading elements (24), wherein the receptacles (28 to 28^{V}) for kneading elements (24) of the six rows (29, 29', 29"), when viewed in the cross section of the housing (10), are distributed non-uniformly over the circumference defined by the inner circumferential surface of the housing (10), wherein the angle (d₁) between a receptacle (28) of the first row for kneading elements (24) and a receptacle (28^{I}) of the second row which is adjacent, when viewed in the cross section of the housing (10), to the inner circumferential surface of the housing (10) is from 80 to 100°, the angle (d₂) between the receptacle (28^{I}) of the second row and a receptacle (28") of the third row which is adjacent, when viewed in the cross section of the housing (10), to the inner circumferential surface of the housing (10) is from 80 to 100°, the angle (d₃) between the receptacle (28") of the third row and a receptacle (28^{III}) of the fourth row for kneading elements (24) which is adjacent, when viewed in the cross section of the housing (10), to the inner circumferential surface of the housing (10) is from 20 to 40°, the angle (d₄) between the receptacle (28^{III}) of the fourth row and a receptacle (28^{IV}) of the fifth row which is adjacent, when viewed in the cross section of the housing (10), to the inner circumferential surface of the housing (10) is from 50 to 70°, the angle (d₅) between the receptacle (28^{IV}) of the fifth row and a receptacle (28^{V}) of the sixth row (28^{V}) which is adjacent, when viewed in the cross section of the housing (10), to the inner circumferential surface of the housing (10) is from 50 to 70°, and the angle (d₆) between the receptacle (28^{V}) of the sixth row and the receptacle (28) of the first row which is adjacent, when viewed in the cross section of the housing (10), to the inner circumferential surface of the housing (10) is from 20 to 40°, wherein the total sum of the angles (d₁ to d₆) between all adjacent receptacles is 360°.

2. The housing (10) according to claim 1, **characterized in that** the angle (d₁) between the receptacles (28, 28^{I}) of the first and adjacent second row is from 85 to 95°, the angle (d₂) between the receptacles (28^{I}, 28^{II}) of the second and third row is from 85 to 95°, the angle (d₃) between the receptacles (28^{II}, 28^{III}) of the third and fourth row is from 25 to 35°, the angle (d₄) between the receptacles (28^{III}, 281^{IV}) of the fourth and fifth row is from 55 to 65°, the angle (d₅) between the receptacles (28^{IV}, 28^{V}) of the fifth and sixth row is from 55 to 65°, and the angle (d₆) between the receptacles (28^{V}, 28) of the sixth and the first row is from 25 to 35°.

3. The housing (10) according to claim 1 or 2, **characterized in that** the angle (d₁) between the receptacles (28, 28^{I}) of the first and adjacent second row is 90°, the angle (d₂) between the receptacles (28^{I}, 28") of the second and third row is 90°, the angle (d₃) between the receptacles (28", 28^{III}) of the third and fourth row is 30°, the angle (d₄) between the receptacles (28^{III} to 28^{IV}) of the fourth and fifth row is 60°, the angle (d₅) between the receptacles (28^{IV}, 28^{V}) of the fifth and sixth row is 60°, and the angle (d₆) between the receptacles (28^{V}, 28) of the sixth and first row is 30°.

4. The housing (10) according to at least one of the preceding claims, **characterized in that** at least one of the receptacles (28 to 28^{V}) and preferably each of the receptacles (28 to 28^{V}) is a recess, depression or hole.

5. The housing (10) according to at least one of the preceding claims, **characterized in that** the housing comprises an outer housing and at least one replaceable housing shell (16) arranged on the inner circumferential surface thereof, the receptacles (28 to 28^{V}) for kneading elements (24) extending from the inner circumferential surface of the at least one housing shell (16) at least in portions into the housing shell (16).

6. The housing (10) according to at least one of the preceding claims, **characterized in that** at least one of the receptacles (28 to 28^{V}) and preferably each of the receptacles (28 to 28^{V}) extends through the housing wall such that a kneading element (24) which is arranged in the receptacle (28 to 28^{V}) and has a fixing element (26) connected thereto can be fixed to the outer wall (30) of the housing (10) by a nut (32).

7. The housing (10) according to at least one of the preceding claims, **characterized in that** the housing (10) and, if present, the at least one housing shell (16) are divided in half along a longitudinal plane of the housing (10), as long as the receptacles (28 to 28^{V}) for kneading elements (24) remain unimpaired, and are preferably divided vertically or horizontally.

8. The housing (10) according to at least one of the preceding claims, **characterized in that** each of the rows (29, 29', 29") comprises at least five receptacles (28 to 28^{V}) in each case and preferably at least eight receptacles for kneading elements (24) in each case.

9. A mixing and kneading machine (100) for continuous preparation processes comprising a housing (10) according to at least one of the preceding claims.

10. The mixing and kneading machine (100) according to claim 9, **characterized in that** it further comprises a screw shaft (12) which extends at least in portions in the axial direction through the interior (18) of the housing (10), rotates during operation in the interior (18) and at the same time moves translationally back and forth in the axial direction, the screw shaft (12) comprising a shaft bar (20), on the circumferential surface of which at least two blade elements (22) which extend radially outwardly from the shaft bar (20) toward the inner circumferential surface of the housing (10) are arranged.

11. The mixing and kneading machine (100) according to claim 10, **characterized in that** at least six blade elements (22) which extend radially outwardly from the shaft bar (20) toward the inner circumferential surface of the housing (10) are arranged on the portion of the circumferential surface of the shaft bar (20) of the screw shaft (12) that extends in the axial direction of the housing (10) and is in the portion of the inner circumferential surface of the housing (10) over which the six rows (29, 29', 29") comprising receptacles (28 to 28^{V}) for kneading elements (24) extend in the axial direction of the housing (10), the blade elements (22) on this portion of the shaft bar (20) being arranged in two, three or four rows which extend in the axial direction over this portion of the circumferential surface of the shaft bar (20), all of the at least two rows, when viewed in the axial direction, each comprising at least three blade elements (22).

12. The mixing and kneading machine (100) according to claim 11, **characterized in that** the blade elements (22) on this portion of the shaft bar (20) are arranged in two, three or four rows which extend in the axial direction over this portion of the circumferential surface of the shaft bar (20), all of the rows, when viewed in the axial direction, each comprising at least three, preferably at least five, and particularly preferably at least eight, blade elements (22).

13. The mixing and kneading machine (100) according to at least one of claims 10 to 12, **characterized in that** the blade elements (22) of all rows do not differ in the value of the angular portion by which they extend over the cross-sectional circumference of the shaft bar (20) by more than 10°, preferably not by more than 5°, particularly preferably not by more than 2°, and very particularly preferably they do not differ at all.

14. The mixing and kneading machine (100) according to at least one of claims 10 to 13, **characterized in that** of the number of rows (29, 29', 29") of receptacles (28 to 28^{V}) for kneading elements (24), a first number of rows (29, 29', 29") is occupied by kneading elements (24) in a first portion of the housing (10) extending in the axial direction and a second number of rows (29, 29', 29") is occupied by kneading elements (24) in a second portion of the housing (10) extending in the axial direction, the second number being different from the first number, and **in that** a corresponding first portion of the screw shaft (12) extending in the axial direction is associated with the first portion of the housing (10), where the number of blade elements (22) is a third number, and the second portion of the housing (10) is associated with a second portion of the screw shaft (12) extending in the axial direction, where the number of blade elements (22) is a fourth number, the fourth number being different from the third number.

15. A housing shell (16) or at least two housing shell parts which complement one another to form a housing shell (16), wherein a hollow interior (18) delimited by the inner circumferential surface of the housing shell (16) is formed in the housing shell (16), and receptacles (28 to 28^{V}) for kneading elements (24) extending at least in portions from the inner circumferential surface of the housing shell (16) into the housing shell (16) are provided in the housing shell (16), wherein the receptacles (28 to 28^{V}) are arranged on the inner circumferential surface of the housing shell (16) in six rows (29, 29', 29") which extend in the axial direction over at least a portion of the inner circumferential surface of the housing shell (16), wherein all of the six rows (29, 29', 29") each comprise at least three receptacles (28 to 28^{V}) for kneading elements (24), wherein the receptacles (28 to 28^{V}) for kneading elements (24) of the six rows (29, 29', 29"), when viewed in the cross section of the housing shell (16), are distributed non-uniformly over the circumference defined by the inner circumferential surface of the housing shell (16), wherein the angle (d₁) between a receptacle (28) of the first row for kneading elements (24) and a receptacle (28^{I}) of the second row which is adjacent, when viewed in the cross section of the housing shell (16), to the inner circumferential surface of the housing shell (16) is from 80 to 100°, the angle (d₂) between the receptacle (28^{I}) of the second row and a receptacle (28") of the third row which is adjacent, when viewed in the cross section of the housing shell (16), to the inner circumferential surface of the housing shell (16) is from 80 to 100°, the angle (d₃) between the receptacle (28") of the third row and a receptacle (28^{III}) of the fourth row which is adjacent, when viewed in the cross section of the housing shell (16), to the inner circumferential surface of the housing shell (16) is from 20 to 40°, the angle (d₄) between the receptacle (28^{III}) of the fourth row and a receptacle (28^{IV}) of the fifth row which is adjacent, when viewed in the cross section of the housing shell (16), to the inner circumferential surface of the housing shell (16) is from 50 to 70°, the angle (d₅) between the receptacle (28^{IV}) of the fifth row and the receptacle (28^{V}) of the sixth row which is adjacent, when viewed in the cross section of the housing shell (16), to the inner circumferential surface of the housing shell (16) is from 50 to 70°, and the angle (d₆) between the receptacle (28^{V}) of the sixth row and the receptacle (28) of the first row which is adjacent, when viewed in the cross section of the housing shell (16), to the inner circumferential surface of the housing shell (16) is from 20 to 40°, wherein the total sum of the angles (d₁ to d₆) between all adjacent receptacles is 360°.

## Revendications

1. Boîtier (10) pour une machine à mélanger et à pétrir (100) pour des processus de traitement en continu, dans lequel un espace intérieur (18) creux délimité par la surface circonférentielle intérieure du boîtier (10) est formé dans le boîtier (10), et des logements (28 à 28^{V}) pour des éléments de pétrissage (24) s'étendant au moins par sections à partir de la surface circonférentielle intérieure du boîtier (10) dans le boîtier (10) sont fournis dans le boîtier (10), dans lequel les logements (28 à 28^{V}) sont disposés sur la surface circonférentielle intérieure du boîtier (10) en six rangées (29, 29', 29") s'étendant dans la direction axiale sur au moins une section de la surface circonférentielle intérieure du boîtier (10), dans lequel toutes les six rangées (29, 29', 29") comprennent respectivement au moins trois logements (28 à 28^{V}) pour les éléments de pétrissage (24), dans lequel les logements (28 à 28^{V}) pour les éléments de pétrissage (24) des six rangées (29, 29', 29"), vu dans la section transversale du boîtier (10), sont répartis de manière inégale sur la circonférence définie par la surface circonférentielle intérieure du boîtier (10), dans lequel l'angle (d₁) entre un logement (28) d'une première rangée pour les éléments de pétrissage (24) et un logement (28^{I}) de la deuxième rangée adjacente sur la surface circonférentielle intérieure du boîtier (10), vue dans la section transversale du boîtier (10), est de 80 à 100 °, l'angle (d₂) entre le logement (28^{I}) de la deuxième rangée et un logement (28^{II}) de la troisième rangée adjacente sur la surface circonférentielle intérieure du boîtier (10), vue dans la section transversale du boîtier (10), est de 80 à 100 °, l'angle (d₃) entre le logement (28^{II}) de la troisième rangée et un logement (28^{III}) de la quatrième rangée pour les éléments de pétrissage (24) adjacente sur la surface circonférentielle intérieure du boîtier (10), vue dans la section transversale du boîtier (10), est de 20 à 40 °, l'angle (d₄) entre le logement (28^{III}) de la quatrième rangée et un logement (28^{IV}) de la cinquième rangée adjacente sur la surface circonférentielle intérieure du boîtier (10), vue dans la section transversale du boîtier (10), est de 50 à 70 °, l'angle (d₅) entre le logement (28^{IV}) de la cinquième rangée et un logement (28^{V}) de la sixième rangée (28^{V}) adjacente sur la surface circonférentielle intérieure du boîtier (0), vue dans la section transversale du boîtier (10), est de 50 à 70 ° et l'angle (de) entre le logement (28^{V}) de la sixième rangée et le logement (28) de la première rangée adjacente sur la surface circonférentielle intérieure du boîtier (10), vue dans la section transversale du boîtier (10), est de 20 à 40 °, dans lequel la somme des angles (d₁ à d₆) entre tous les logements adjacents est de 360 °.

2. Boîtier (10) selon la revendication 1, **caractérisé en ce que** l'angle (d₁) entre les logements (28, 28^{I}) de la première rangée et de la deuxième rangée adjacente est de 85 à 95 °, l'angle (d₂) entre les logements (28^{I}, 28^{II}) de la deuxième rangée et et de la troisième rangée est de 85 à 95 °, l'angle (d₃) entre les logements (28^{II}, 28^{III}) de la troisième rangée et de la quatrième rangée est de 25 à 35 °, l'angle (d₄) entre les logements (28^{III}, 28^{IV}) de la quatrième rangée et de la cinquième rangée est de 55 à 65 °, l'angle (d₅) entre les logements (28^{IV}, 28^{V}) de la cinquième rangée et de la sixième rangée est de 55 à 65 ° et l'angle (d₆) entre les logements (28^{V}, 28) de la sixième rangée et de la première rangée est de 25 à 35 °.

3. Boîtier (10) selon la revendication 1 ou 2, **caractérisé en ce que** l'angle (d₁) entre les logements (28, 28^{I}) de la première rangée et de la deuxième rangée adjacente est de 90 °, l'angle (d₂) entre les logements (28^{I},28^{II}) de la deuxième rangée et de la troisième rangée est de 90 °, l'angle (d₃) entre les logements (28^{II}, 28^{III}) de la troisième rangée et de la quatrième rangée est de 30 °, l'angle (d₄) entre les logements (28^{III} à 28^{IV}) de la quatrième rangée et de la cinquième rangée est de 60 °, l'angle (d₅) entre les logements (28^{IV}, 28^{V}) de la cinquième rangée et de la sixième rangée est de 60 ° et l'angle (d₆) entre les logements (28^{V}, 28) de la sixième rangée et de la première rangée est de 30 °.

4. Boîtier (10) selon au moins l'une quelconque des revendications précédentes, **caractérisé en ce que** l'au moins un des logements (28 à 28^{V}) et de préférence chacun des logements (28 à 28^{V}) est un évidement, une dépression ou un alésage.

5. Boîtier (10) selon au moins l'une quelconque des revendications précédentes, **caractérisé en ce que** le boîtier comprend un boîtier extérieur et au moins une coque de boîtier (16) remplaçable disposée sur sa surface circonférentielle intérieure, dans lequel les logements (28 à 28^{V}) pour les éléments de pétrissage (24) s'étendent à partir de la surface circonférentielle intérieure de l'au moins une coque de boîtier (16) au moins par sections dans la coque de boîtier (16).

6. Boîtier (10) selon au moins l'une quelconque des revendications précédentes, **caractérisé en ce que** l'au moins un des logements (28 à 28^{V}) et de préférence chacun des logements (28 à 28^{V}) s'étend à travers la paroi du boîtier de telle sorte qu'un élément de pétrissage (24) disposé dans le logement (28 à 28^{V}) avec un élément de fixation (26) relié à celui-ci peut être fixé sur la paroi extérieure (30) du boîtier (10) au moyen d'un écrou (32).

7. Boîtier (10) selon au moins l'une quelconque des revendications précédentes, **caractérisé en ce que** le boîtier (10) et, le cas échéant, l'au moins une coque de boîtier (16) sont divisés en deux le long d'un plan longitudinal du boîtier (10), tant que les logements (28 à 28^{V}) pour les éléments de pétrissage (24) restent inchangés, et, de préférence verticalement ou horizontalement.

8. Boîtier (10) selon au moins l'une quelconque des revendications précédentes, **caractérisé en ce que** chacune des rangées (29, 29', 29") comprend respectivement au moins cinq logements (28 à 28^{V}) et, de préférence respectivement au moins huit logements pour les éléments de pétrissage (24).

9. Machine à mélanger et à pétrir (100) pour des processus de traitement en continu comprenant un boîtier (10) selon au moins l'une quelconque des revendications précédentes.

10. Machine à mélanger et à pétrir (100) selon la revendication 9, **caractérisée en ce qu'**elle comprend en outre un arbre à vis sans fin (12) s'étendant au moins par sections dans la direction axiale à travers l'espace intérieur (18) du boîtier (10), lequel, lors du fonctionnement, tourne à l'intérieur (18) du boîtier (10) et se déplace en même temps en translation d'avant en arrière dans la direction axiale, dans laquelle l'arbre à vis sans fin (12) comprend une tige d'arbre (20), sur la surface circonférentielle de laquelle sont disposés au moins deux éléments d'aile (22) s'étendant à partir de la tige d'arbre (20) radialement vers l'extérieur dans la direction de la surface circonférentielle intérieure du boîtier (10).

11. Machine à mélanger et à pétrir (100) selon la revendication 10, **caractérisée en ce que** sur la section de la surface circonférentielle de la tige d'arbre (20) de l'arbre à vis sans fin (12) s'étendant dans la direction axiale du boîtier (10), laquelle se trouve dans la section de la surface circonférentielle intérieure du boîtier (10), au-dessus de laquelle les six rangées (29, 29', 29") comprenant des logements (28 à 28^{V}) pour les éléments de pétrissage (24) s'étendent dans la direction axiale du boîtier (10), sont disposés au moins six éléments d'aile (22), lesquels s'étendent radialement vers l'extérieur à partir de la tige d'arbre (20), dans laquelle les éléments d'aile (22) sont disposés sur ladite section de la tige d'arbre (20) dans au moins deux rangées s'étendant dans la direction axiale au-dessus de ladite section de la surface circonférentielle de la tige d'arbre (20), dans laquelle toutes les au moins deux rangées comprennent, vu dans la direction axiale, respectivement au moins trois éléments d'aile (22).

12. Machine à mélanger et à pétrir (100) selon la revendication 11, **caractérisée en ce que** les éléments d'aile (22) sur ladite section de la tige d'arbre (20) sont disposés en deux, trois ou quatre rangées s'étendant dans la direction axiale au-dessus de ladite section de la surface circonférentielle de la tige d'arbre (20), dans laquelle toutes les rangées comprennent, vu dans la direction axiale, respectivement au moins trois, de préférence au moins cinq et de manière particulièrement préférée au moins huit éléments d'aile (22).

13. Machine à mélanger et à pétrir (100) selon au moins l'une quelconque des revendications 10 à 12, **caractérisée en ce que** les éléments d'aile (22) de toutes les rangées ne se différencient pas de plus de 10 °, de préférence pas de plus de 5 °, de manière particulièrement préférée pas de plus de 2 ° et idéalement pas du tout dans la valeur de la section angulaire sur laquelle ils s'étendent sur la circonférence de la section transversale de la tige d'arbre (20).

14. Machine à mélanger et à pétrir (100) selon au moins l'une quelconque des revendications 10 à 13, **caractérisée en ce que**, du nombre de rangées (29, 29', 29") de logements (28 à 28^{V}) pour les éléments de pétrissage (24) dans une première section du boîtier (10) s'étendant dans la direction axiale, un premier nombre de rangées (29, 29', 29") sont occupées par des éléments de pétrissage (24) et dans une deuxième section s'étendant dans la direction axiale du boîtier (10), un deuxième nombre de rangées (29, 29', 29") sont occupées par des éléments de pétrissage (24), dans laquelle le deuxième nombre est différent du premier nombre, et qu'une première section de l'arbre à vis sans fin (12) s'étendant dans la direction axiale est associée à la première section du boîtier (10), le nombre d'éléments d'aile (22) étant un troisième nombre, et une deuxième section de l'arbre à vis sans fin (12) s'étendant dans la direction axiale est associée à la deuxième section du boîtier (10), le nombre d'éléments d'aile (22) étant un quatrième nombre, dans laquelle le quatrième nombre est différent du troisième nombre.

15. Coque de boîtier (16) ou au moins deux parties de coque de boîtier, lesquelles se complètent pour former une coque de boîtier (16), dans laquelle un espace intérieur (18) creux délimité par la surface circonférentielle intérieure de la coque de boîtier (16) est formé dans la coque de boîtier (16) et des logements (28 à 28^{V}) pour des éléments de pétrissage (24) s'étendant au moins par sections à partir de la surface circonférentielle intérieure de la coque de boîtier (16) dans la coque de boîtier (16) sont fournis dans la coque de boîtier (16), dans laquelle les logements (28 à 28^{V}) sont disposés sur la surface circonférentielle intérieure de la coque de boîtier (16) en six rangées (29, 29', 29") s'étendant dans la direction axiale sur au moins une section de la surface circonférentielle intérieure de la coque de boîtier (16), dans laquelle toutes les six rangées (29, 29', 29") comprennent respectivement au moins trois logements (28 à 28^{V}) pour les éléments de pétrissage (24), dans laquelle les logements (28 à 28^{V}) pour les éléments de pétrissage (24) des six rangées (29, 29', 29") sont répartis, vu dans la section transversale de la coque de boîtier (16), de manière inégale sur la circonférence définie par la surface circonférentielle intérieure de la coque de boîtier (16), dans laquelle l'angle (d₁) entre un logement (28) d'une première rangée pour les éléments de pétrissage (24) et un logement (28^{I}) de la deuxième rangée adjacente sur la surface circonférentielle intérieure de la coque de boîtier (16), vu dans la section transversale de la coque de boîtier (16), est de 80 à 100 l'angle (d₂) entre le logement (28^{I}) de la deuxième rangée et un logement (28^{II}) de la troisième rangée adjacente sur la surface circonférentielle intérieure de la coque de boîtier (16), vu dans la section transversale de la coque de boîtier (16), est de 80 à 100 °, l'angle (d₃) entre le logement (28") de la troisième rangée et un logement (28^{III}) de la quatrième rangée adjacente sur la surface circonférentielle intérieure de la coque de boîtier, vu dans la section transversale de la coque de boîtier (16), est de 20 à 40 °, l'angle (d₄) entre le logement (28^{III}) de la quatrième rangée et un logement (28^{IV}) de la cinquième rangée adjacente sur la surface circonférentielle intérieure de la coque de boîtier (16), vu dans la coupe transversale de la coque de boîtier (16), est de 50 à 70 °, l'angle (d₅) entre le logement (28^{IV}) de la cinquième rangée et le logement (28^{V}) de la sixième rangée adjacente sur la surface circonférentielle intérieure de la coque de boîtier (16), vu dans la section transversale de la coque de boîtier (16) est de 50 à 70 °, et l'angle (d₆) entre le logement (28^{V}) de la sixième rangée et le logement (28) de la première rangée adjacente sur la surface circonférentielle intérieure de la coque de boîtier (16), vu dans la section transversale de la coque de boîtier (16), est de 20 à 40 °, dans laquelle la somme des angles (d₁ à d₆) entre tous les logements adjacents est de 360 °.
